# EUROPEAN PATENT APPLICATION

(11) **EP 4 393 591 A1**
(43) Date of publication of application: **03.07.2024**
(21) Application number: 22860635.6
(22) Date of filing: 26.08.2022
(51) Int. Cl.: B01L 3/00

(54) **CONTROL DEVICE FOR MICRO-DROPLET PREPARATION AND MICRO-DROPLET PREPARATION METHOD**

(30) Priority: 26.08.2021 CN 202110985508; 20.12.2021 CN 202111563506
(71) Applicant: Maccura Biotechnology Co., Ltd., Chengdu Sichuan 611731 (CN)
(72) Inventor: MA, Liang, Beijing 100085 (CN)
(74) Representative: Laine IP Oy
(86) International application number: PCT/CN2022/115164
(87) International publication number: WO 2023/025289

(57) **Abstract**

A control device for micro-droplet preparation, the control device including a micro-droplet preparation unit, wherein the micro-droplet preparation unit comprises an asymmetric vibrating micro-droplet generation mechanism (1) and a first dynamic positioning assembly (200); the first dynamic positioning assembly (200) is fixedly connected to the asymmetric vibrating micro-droplet generation mechanism (1); the first dynamic positioning assembly (200) is configured to precisely position the asymmetric vibrating micro-droplet generation mechanism (1); and the asymmetric vibrating micro-droplet generation mechanism (1) is configured to generate micro-droplets through asymmetric reciprocating motion. The use of the control device enables the micro-droplets having a uniform size and a controllable volume to be prepared only by regulating a flow rate of a liquid sample and a vibration frequency of a sample injector.

## Description

### Field of Technology

The present disclosure relates to the technical field of micro-droplet preparation, and in particular, to a control device for micro-droplet preparation and a micro-droplet preparation method using the same.

### Background

Micro-droplets are widely used in various fields, and a microfluidic technology based on the micro-droplets has been rapidly developed and applied in the fields of digital PCR (Digital Polymerase Chain Reaction, dPCR), single cell culture, single cell genome/transcriptome sequencing, single cell functional sorting, high-throughput reaction screening, protein crystallization, etc.

As for generation of a micro-droplet, substances of two immiscible phases are used to generate an emulsified micro-droplet. Phase of the micro-droplet is referred to as a dispersed phase, and phase of what wrap the micro-droplet is referred to as a continuous phase. After being generated, micro-droplets are subjected to operations such as splitting, fusion, mixing, dilution, collection and sorting. Therefore, it is very important to control the shape, size and monodispersity of the micro-droplets.

In the existing technologies, there are mainly three micro-droplet generation technologies. One of them involves the use of a microfluidic chip for generation of micro-droplets, the principle of which is based on interfacial destabilization of the dispersed phase and the continuous phase while they are converging in a micro-pipeline. However, the inventor found that the generation of micro-droplets on such microfluidic chip needs to satisfy conditions such as a specific flow rate, oil-water interfacial tension, pipeline configuration and pipeline surface modification, and that a regulated range of volume of a micro-droplet is also constrained by the above factors. Additionally, after the micro-droplets are generated within a pipeline of the microfluidic chip, specific steps and a specific device are required to transfer them to a storage container, which makes it difficult to customize the condition of a single micro-droplet, and inconvenient to carry out operations such as positioning, extraction and analysis of the micro-droplet.

The second micro-droplet generation technology involves the use of a special device to spray a trace amount of liquid to form a micro-droplet, for example, using special spray or micro-droplet excitation methods such as spiezoelectric ceramics, thermal excitation expansion, and high-voltage electrospray. However, the inventor found that it is difficult to precisely regulate and control the volume of the micro-droplet with such methods, and that a fluid control system matched therewith is relatively complex.

The third micro-droplet generation technology involves vibrating an outlet of a micro-pipeline up and down at a gas-liquid interface of the continuous phase when a trace amount of liquid is injected into the continuous phase through the micro-pipeline, and then using a cutting action of surface tension of the interface between the phases to form the micro-droplets having a uniform size (Micro-pipeline-based liquid droplet generation method, by DU Wenbin et al., China patent No. ZL201410655191.5). The use of this method enables the micro-droplets having a uniform size and a controllable volume to be prepared. However, the inventor found that a micro-droplet sample generated by this method needs to be stored in a micro-injector connected to the micro-pipeline via a conduit, so that it is required to replace the micro-pipeline, the conduit and the micro-injector together when various samples of micro-droplets are prepared, which increases the complexity of operation. At the same time, it is difficult for a fluid control system matched therewith to prepare a micro-droplet for a sample with micro volume. Additionally, during generation of the droplets, the micro-pipeline needs to be precisely positioned on a liquid level of a second liquid, but an inherent error of positioning and a dynamic change of the liquid level during droplet generation will cause the micro-pipeline to deviate or gradually deviate from an optimal positioning height, so that it is impossible to generate uniform droplets in a stable and continuous manner.

### Summary

One main objective of the present disclosure is to overcome at least one of the above defects in the existing technologies and to provide a control device for micro-droplet preparation. The control device includes a micro-droplet preparation unit. The micro-droplet preparation unit includes an asymmetric vibrating micro-droplet generation mechanism and a first dynamic positioning assembly. The first dynamic positioning assembly is fixedly connected to the asymmetric vibrating micro-droplet generation mechanism. Under the condition of precise dynamic positioning by the first dynamic positioning assembly, the asymmetric vibrating micro-droplet generation mechanism drives a sample injector to generate a micro-droplet below a liquid level of a second liquid through asymmetric reciprocating motion, thus avoiding secondary emulsification and breakup of the droplet caused by aggravated disturbance from a micro-pipeline to an oil phase due to a dynamic change of the liquid level and a liquid addition error, and effectively ensuring the stability and consistency of a droplet generation system.

One main objective of the present disclosure is to overcome at least one of the above defects in the existing technologies and to provide a control device for fully filling a liquid sucking conduit, a liquid supplying conduit, an electric two-position three-way switch valve (e.g. an electromagnetic two-position three-way valve, or a motor-driven rotary three-way valve, or the like), a sample injector adapter, and a sample injector with a carrier liquid. Compared with a micropipettor based on a principle of air piston, the control device provided by the present disclosure can precisely suck and discharge a nanoliter volume of a first liquid sample by utilizing a principle of positive displacement. At the same time, the volume of the first liquid sample sucked using the control device is less than a capacity of a cavity connecting to the sample injector, so that when micro-droplets of a different first liquid sample are prepared, only the sample injector needs to be replaced according to the micro-droplet preparation method, thus reducing the complexity of experimental operation.

One main objective of the present disclosure is to overcome at least one of the above defects in the existing technologies and to provide a control device that is provided for a second opening container containing a second liquid. Micro-droplets prepared using the control device settle and flatly lay at a bottom of a flat-bottomed sample tank inside the second opening container, and the micro-droplets of a nanoliter volume each are protected from evaporation because of the protection by the second liquid. At the same time, steps of transferring and storage of the micro-droplets as well as subsequent steps of imaging detection and analysis on the micro-droplets are simplified.

Another main objective of the present disclosure is to overcome at least one of the above defects in the existing technologies and to provide a method for preparing micro-droplet using the control device. The method enables the micro-droplets having a uniform size and a controllable volume to be prepared only by regulating a flow rate of a liquid sample and a vibration frequency of a sample injector.

In order to achieve the above objectives, the present disclosure adopts the following technical solutions.
1. A control device for micro-droplet preparation, wherein the control device comprises a micro-droplet preparation unit;
   wherein the micro-droplet preparation unit comprises an asymmetric vibrating micro-droplet generation mechanism and a first dynamic positioning assembly, and the first dynamic positioning assembly is fixedly connected to the asymmetric vibrating micro-droplet generation mechanism;
   the first dynamic positioning assembly is configured to position the asymmetric vibrating micro-droplet generation mechanism; and
   the asymmetric vibrating micro-droplet generation mechanism is configured to generate a micro-droplet through asymmetric reciprocating motion.
2. The control device according to item 1, wherein the asymmetric vibrating micro-droplet generation mechanism generates one micro-droplet within one motion period.
3. The control device according to item 1, wherein the asymmetric vibrating micro-droplet generation mechanism includes a vibration assembly, a vibrating mount, a sample injector and a driving controller, wherein
   the driving controller is electrically connected to the vibration assembly, and drives the vibrating mount to make asymmetric reciprocating vibration or asymmetric reciprocating swing, so that the sample injector generates a micro-droplet.
4. The control device according to item 3, wherein the sample injector generates one micro-droplet within one period of the asymmetric reciprocating vibration or the asymmetric reciprocating swing of the vibrating mount.
5. The control device according to item 3, wherein
   the vibration assembly includes a case, a vibrator and a vibration output rod;
   the vibration output rod of the vibration assembly supplies power to the vibrating mount;
   the vibrating mount is provided with a connector, a pipe joint and a sample injector adapter;
   the connector has one end connected to a liquid supplying conduit via the pipe joint and another end connected to the sample injector by means of the sample injector adapter; and
   a central axis of the sample injector is perpendicular to an axis of the vibration output rod.
6. The control device according to item 5, wherein the asymmetric reciprocating motion is asymmetric reciprocating vibration of the vibrating mount in a direction of a central axis of the vibration output rod.
7. The control device according to item 5, wherein the asymmetric reciprocating motion is asymmetric swing of the vibrating mount with a central axis of the vibration output rod as an axis.
8. The control device according to item 3 or 5, wherein the vibration assembly has a vibration frequency ranging from 10 to 1000 Hz, preferably, 50 to 200 Hz;
   preferably, the vibration assembly has a vibration amplitude ranging from 0.1 to 5 mm, preferably, 0.5 to 2 mm.
9. The control device according to item 5, wherein the vibrating mount has a swing frequency ranging from 10 to 1000 Hz, preferably, 50 to 200 Hz;
   preferably, a distance between a liquid ejecting opening of the sample injector and the axis of the vibration output rod ranges from 10 to 100 mm, preferably, 30 to 80 mm; and the vibrating mount has a swing angle ranging from 0.05° to 10°, preferably, 0.2° to 2°.
10. The control device according to item 5, wherein the vibrating mount and the vibration output rod are connected through a coupling.
11. The control device according to item 3 or 5, wherein the vibration assembly further includes a position sensor, and the driving controller implements closed-loop control of motion by acquiring a real-time position feedback signal of the position sensor; and
   preferably, the position sensor is any one of a grating scale sensor, a capacitive position sensor, a resistive sensor, a current sensor, or a differential transformer sensor.
12. The control device according to item 5, wherein the asymmetric vibrating micro-droplet generation mechanism further includes a supporting and fixing receptacle for fixing the vibration assembly; and
   preferably, the asymmetric vibrating micro-droplet generation mechanism further includes a pump pipe holder for holding the liquid supplying conduit.
13. The control device according to item 3 or 5, wherein there are a plurality of connectors, which are provided inside the vibrating mount at equal intervals;
   preferably, a number of the connectors ranges from 1 to 96, preferably, 2, 4, 8, or 12.
14. The control device according to item 5, wherein the asymmetric vibrating micro-droplet generation mechanism further includes a connection guiding member, wherein
   the vibration output rod of the vibration assembly is connected to the vibrating mount through the connection guiding member to supply power to the vibrating mount.
15. The control device according to item 14, wherein the connection guiding member is a ball spline including a spline shaft and a spline sleeve, and ends of the spline shaft are fixedly connected to the vibration output rod and the vibrating mount, respectively.
16. The control device according to item 14, wherein the connection guiding member includes a first bearing and a second bearing, and the vibrating mount has one end running through the first bearing and connected to the vibration output rod and another end connected to the second bearing, wherein the first bearing is a bearing with an axial stop edge.
17. The control device according to item 3 or 5, further including
   a sample injector unloading mechanism, configured to automatically unload the sample injector after generation of the micro-droplet.
18. The control device according to item 5, wherein the sample injector is of a conical pipe-shaped structure with openings at both ends, an opening at one end is a liquid supply opening for tight insertion with the sample injector adapter, and an opening at other end is a liquid ejecting opening for micro-droplet generation, the liquid ejecting opening has an inner diameter ranging from 20 to 300 µm and an outer diameter ranging from 150 to 600 µm;
   preferably, the sample injector has a liquid storage volume ranging from 5 to 500 µL, preferably, 20 to 60 µL.
19. The control device according to item 3 or 5, wherein upon the vibrating mount making the asymmetric reciprocating motion, motion of a liquid ejecting part of the sample injector is configured to have one equilibrium point and two reflecting-points at both ends of the equilibrium point, and a motion position versus time curve is asymmetric on both sides of any one of the reflecting-points; and
   preferably, periodic motion of the liquid ejecting part of the sample injector has an asymmetric waveform of an asymmetric combination of at least one of sine wave, sawtooth wave, trapezoidal wave, triangular wave, and square wave.
20. The control device according to item 3 or 5, wherein the vibration assembly is configured as a mechanism producing continuous or intermittent motion, the vibration assembly is one selected from electromagnetic vibration device, piezoelectric ceramic vibration device, eccentric wheel type vibration device, a servo motor, a voice coil motor, and a galvanometer motor.
21. The control device according to item 1, wherein the first dynamic positioning assembly includes:
   a positioning assembly lifting displacement mechanism, configured to control lifting of the asymmetric vibrating micro-droplet generation mechanism;
   preferably, the first dynamic positioning assembly further includes a liquid level probing mechanism.
22. The control device according to item 1, further including a fluid control unit,
   the fluid control unit includes a fluid driving device and a conduit, and the conduit has one end connected to the fluid driving device and another end connected to the asymmetric vibrating micro-droplet generation mechanism;
   preferably, the fluid driving device is configured to set a flow rate for liquid sucking and discharging of a sample injector.
23. The control device according to item 22, further including a second dynamic positioning assembly, the second dynamic positioning assembly is configured to fix and move a first opening container and a second opening container;
   preferably, the driving controller supplies power to the fluid driving device, the first dynamic positioning assembly and the second dynamic positioning assembly.
24. The control device according to item 23, wherein the first opening container is a single liquid storage tank, a one-dimensional liquid storage tank array, or a two-dimensional liquid storage tank array, and each liquid storage tank has a capacity ranging from 10 to 1000 µL, preferably, 20 to 200 µL;
   preferably, the first opening container contains a first liquid;
   preferably, the second opening container is a two-dimensional flat-bottomed sample tank array for flatly laying generated micro-droplets; preferably, the second opening container includes 24, 32, 96 or 384 flat-bottomed sample tanks with an equal capacity;
   preferably, the second opening container contains a second liquid.
25. The control device according to item 22, wherein the fluid driving device is a pulsation-free driving pump, preferably, an injection pump, and further preferably, a number of the fluid driving device is one or more.
26. The control device according to item 22, wherein the conduit includes a liquid supplying conduit and a liquid sucking conduit, the liquid sucking conduit has one end connected to the fluid driving device through one valve port of an electric two-position three-way switch valve, and another end of the liquid sucking conduit is inserted into an oil storage device; and the liquid supplying conduit has one end connected to the fluid driving device through one valve port of the electric two-position three-way switch valve, and another end of the liquid supplying conduit is connected to the asymmetric vibrating micro-droplet generation mechanism.
27. The control device according to item 1, further including a preparing unit, the preparing unit includes a sample injector rack, an oil removing mechanism and a waste receptor, the oil removing mechanism is located above the waste receptor, and the sample injector is unloaded above the waste receptor.
28. A method for preparing micro-droplets using the control device according to any one of items 1-27, including steps of:
   driving the conduit, the sample injector adapter and the sample injector by using the fluid driving device to fully fill a sample injector with a first liquid; and
   contacting the sample injector fully filled with the first liquid with a second liquid, and driving, by the asymmetric vibrating micro-droplet generation mechanism under driving of the fluid driving device, the sample injector adapter to drive the sample injector to make asymmetric reciprocating motion below a liquid level of the second liquid, thus generating a micro-droplet.
29. The method according to item 28, wherein before driving the conduit, the sample injector adapter and the sample injector by using the fluid driving device to fully fill the sample injector with a first liquid, the method further includes steps of:
   a) moving the sample injector adapter to the oil removing mechanism, driving, by the fluid driving device, the liquid sucking conduit to suck a carrier liquid, switching an electric two-position three-way switch valve, discharging, by the fluid driving device, the carrier liquid from the sample injector adapter to fully fill the liquid sucking conduit, the liquid supplying conduit, the electric two-position three-way switch valve and the sample injector adapter with the carrier liquid without bubbles, and at the same time, removing, by the oil removing mechanism, excess carrier liquid discharged from an opening at a lower end of the sample injector adapter;
   b) inserting the sample injector adapter fully filled with the carrier liquid into the sample injector, so that the sample injector and the sample injector adapter are connected in an inserted manner; and
   c) moving the sample injector to the oil removing mechanism, switching the electric two-position three-way switch valve, repeating the step a) to fully fill the liquid sucking conduit, the liquid supplying conduit, the electric two-position three-way switch valve, the sample injector adapter and a sample injector with the carrier liquid without bubbles, and at the same time, removing, by the oil removing mechanism, excess carrier liquid discharged from an opening of the sample injector.
30. The method according to item 29, wherein driving the conduit, the sample injector adapter and the sample injector by using the fluid driving device to fully fill a sample injector with a first liquid includes
   moving the sample injector in step c) to a position above a liquid level of the first opening container containing the first liquid, and moving it downwards to make a liquid outlet of the sample injector contact with and immersed in the first liquid, and switching the electric two-position three-way switch valve to suck the first liquid into the sample injector, so that the sample injector is fully filled with the first liquid.
31. The method according to item 30, wherein a volume of the first liquid sucked by the sample injector liquid outlet is less than a capacity of a cavity connecting to the sample injector.
32. The method according to item 28, further including
   unloading, after completing micro-droplet preparation using the first liquid, the sample injector, and then reinserting a sample injector for micro-droplet preparation of another first liquid.
33. The method according to item 28, wherein the sample injector makes asymmetric reciprocating vibration or asymmetric swing below the liquid level of the second liquid, and the fluid driving device is configured to set a flow rate for discharging the first liquid from the sample injector, thus generating a micro-droplet.
34. The method according to item 28, wherein only one micro-droplet is generated within one period of the asymmetric reciprocating motion by the sample injector below the liquid level of the second liquid.
35. The method according to item 28, wherein the first dynamic positioning assembly drives the asymmetric vibrating micro-droplet generation mechanism to precisely position the sample injector below the liquid level of the second liquid, and during asymmetric vibration of the sample injector, an average depth of the sample injector inserted into the liquid level is dynamically maintained within a range from 0 to 2.0 mm below the liquid level, preferably, within a range from 0 to 1.5 mm below the liquid level.

As can be seen from the above technical solutions, the horizontally vibrating micro-droplet generation mechanism and the micro-droplet generation method provided by the present disclosure have the following advantages and positive effects.
1. Compared with a micropipettor based on a principle of air piston, the control device provided by the present disclosure has a liquid sucking conduit, a liquid supplying conduit, an electric two-position three-way switch valve, a sample injector adapter and a sample injector fully filled with a carrier liquid, and can precisely suck and discharge a nanoliter volume of a liquid sample by utilizing a principle of positive displacement. At the same time, the volume of the liquid sample sucked using the control device is less than a capacity of a cavity connecting to the sample injector, so that when micro-droplets of a different sample are prepared, only the sample injector needs to be replaced according to the micro-droplet preparation method, thus reducing the complexity of experimental operation.
2. The control device provided by the present disclosure is provided with another control device for a second opening container containing a second liquid. Micro-droplets prepared using the another control device settle and flatly lay at the bottom of a flat-bottomed sample tank inside the second opening container, and the micro-droplets of a nanoliter volume each are protected from evaporation because of the protection by the second liquid. At the same time, the steps of transferring and storage of the micro-droplets as well as the subsequent steps of imaging detection and analysis on the micro-droplets are simplified.
3. According to the control device provided by the present disclosure, the vibration assembly of the micro-droplet generation mechanism drives a liquid ejecting opening of the sample injector on the vibrating mount to make acceleration-variable periodic reciprocating motion between two points below a liquid level of an oil phase or between two points across the liquid level of the oil phase. In this way, micro-droplets having a uniform size and a controllable volume can be prepared only by regulating a flow rate of a water-phase liquid inside the sample injector and a vibration frequency of the sample injector.
4. The first dynamic positioning assembly provided by the present disclosure is fixedly connected to the asymmetric vibrating micro-droplet generation mechanism. Under the condition of precise dynamic positioning by the first dynamic positioning assembly, the asymmetric vibrating micro-droplet generation mechanism drives the sample injector to generate a micro-droplet under the liquid level of the second liquid through asymmetric reciprocating motion, thus preventing the droplet from secondary shearing and breakup caused by aggravated disturbance of an oil phase, which is a result of that the micro-pipeline cannot contact with the liquid level of the second liquid or is inserted too deep into the liquid level due to a liquid level dynamic change, a liquid addition error, a sample injector length error, a system assembly error, and the like, and effectively ensuring the stability, continuity and consistency of a droplet generation system.
5. According to the control device provided by the present disclosure, the micro-droplet generation mechanism is provided with a connection guiding member that resists a torque force and a radial force, which avoids a torque force and a radial force exerted to a vibration output rod by inertial forces and gravities of a plurality of sample injectors and a vibrating mount in the process of array-scale generation of micro-droplets and automatic loading of the sample injectors, and ensures the precision of asymmetric reciprocating motion and the stability and uniformity of micro-droplet generation.
6. According to the control device provided by the present disclosure, the micro-droplet generation mechanism adopts an asymmetric vibration mode, which ensures that there is a unique maximum velocity position or maximum cutting force position within one period. Asymmetric machining defects of the sample injector will not affect the generation of droplets, thus achieving a strong compatibility with respect to consumable machining defects, and ensuring the reliability and uniformity of droplet preparation.
7. According to the control device provided by the present disclosure, the driving controller realizes closed-loop feedback control by using a preset asymmetric vibration control program and by virtue of a real-time position feedback signal of a position sensor, realizes precise asymmetric reciprocating motion of the vibrating mount, and realizes the high-precision generation of droplets uniformly having a nanoliter volume.
8. By utilizing the micro-droplet preparation method provided by the present disclosure, the use of the control device mentioned above enables micro-droplets having a uniform size and a controllable volume to be stably and continuously prepared only by regulating a flow rate of a liquid sample and a vibration frequency of a sample injector.

### Brief Description of the Drawings

The following detailed description of preferable embodiments of the present disclosure is considered in conjunction with the drawings so that various objectives, features and advantages of the present disclosure will become more apparent. The drawings are only exemplary illustrations of the present disclosure and are not necessarily drawn to scale. In the drawings, identical reference signs always indicate the same or similar components. In the figures,
FIG. 1 is a schematic diagram of a structure of a control device for preparing micro-droplets provided by the present disclosure.
FIG. 2 is a schematic diagram of a stereostructure of a micro-droplet generation mechanism making asymmetric reciprocating vibration in a direction of a central axis of a vibration output rod provided by the present disclosure, which is an enlarged view of a part labeled 1 in FIG. 1.
FIG. 3 is a schematic diagram of a sectional structure of the micro-droplet generation mechanism making asymmetric reciprocating vibration in the direction of the central axis of the vibration output rod provided by the present disclosure, which is an enlarged view of the part labeled 1 in FIG. 1.
FIG. 4 is a schematic diagram of a stereostructure of a micro-droplet generation mechanism making asymmetric swing provided by the present disclosure, which is an enlarged view of the part labeled 1 in FIG. 1.
FIG. 5 is a front view of the micro-droplet generation mechanism making asymmetric swing provided by the present disclosure, which is an enlarged view of the part labeled 1 in FIG. 1.
FIG. 6 is a schematic sectional view of the micro-droplet generation mechanism making asymmetric swing provided by the present disclosure, which is an enlarged view of the part labeled 1 in FIG. 1.
FIG. 7 is a diagram of structure and control logic of the micro-droplet generation mechanism making asymmetric swing provided by the present disclosure.

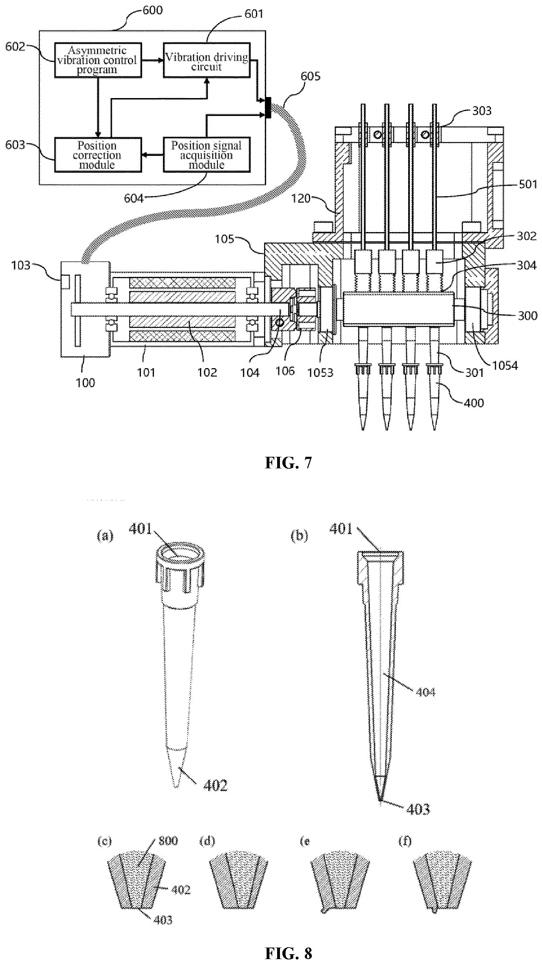

FIG. 8 shows configurations of a liquid ejecting part of a sample injector adapted to the micro-droplet generation mechanism provided by the present disclosure, where (a) is a 3D view of the sample injector; (b) is a sectional view of the sample injector; (c) shows an ideal structure of the sample injector when the liquid ejecting part of the sample injector is flat and has a uniform wall thickness; (d) shows a left-right asymmetric structure of the sample injector when the liquid ejecting part of the sample injector is flat but has a non-uniform wall thickness; (e) shows a manufacturing defect of a burr on an outer edge of a liquid ejecting opening of the liquid ejecting part of the sample injector; and (f) shows a manufacturing defect of a burr on an inner edge of the liquid ejecting opening of the liquid ejecting part of the sample injector.
FIG. 9 shows curves of sine and sawtooth waves combined asymmetric vibration adopted in a micro-droplet generation mechanism according to a specific embodiment provided by the present disclosure. (a) shows a vibration position-time curve; and (b) shows a vibration velocity-time curve.
FIG. 10 shows curves of asymmetric sawtooth waves combined asymmetric vibration adopted in a micro-droplet generation mechanism according to a specific embodiment provided by the present disclosure. (a) shows a vibration position-time curve; and (b) shows a vibration velocity-time curve.
FIG. 11 shows curves of sawtooth and square waves combined asymmetric vibration adopted in a micro-droplet generation mechanism according to a specific embodiment provided by the present disclosure. (a) shows a vibration position-time curve; and (b) shows a vibration velocity-time curve.
FIG. 12 shows position-time curves of asymmetric vibration adopted in a comparative example of the present disclosure. (a) shows a sine wave; and (b) shows a square wave.
FIG. 13 is a diagram of an outcome of micro-droplets generated by a micro-droplet generation mechanism in Embodiment 1 of the present disclosure.
FIG. 14 is a diagram of an outcome of micro-droplets generated by a micro-droplet generation mechanism in Embodiment 2 of the present disclosure.
FIG. 15 is a diagram of an outcome of micro-droplets generated by a micro-droplet generation mechanism adopting a symmetric vibration waveform in Comparative Example 1 of the present disclosure.
FIG. 16 is a diagram of an outcome of micro-droplets generated by a micro-droplet generation mechanism adopting a symmetric vibration waveform in Comparative Example 2 of the present disclosure.
FIG. 17 is a schematic diagram of vibration positions of a micro-droplet generation mechanism making asymmetric reciprocating vibration provided by the present disclosure.
FIG. 18 is a schematic diagram of swing positions of a micro-droplet generation mechanism making asymmetric swing provided by the present disclosure.
FIG. 19 is a schematic diagram of vibration positions of a micro-droplet generation mechanism making asymmetric reciprocating vibration provided by the present disclosure.
FIG. 20 is a schematic diagram of vibration positions of a micro-droplet generation mechanism making asymmetric swing provided by the present disclosure.
FIG. 21 is a schematic diagram of a structure of a control device for preparing micro-droplets provided by the present disclosure.
FIG. 22 is a schematic diagram of droplets generated in Embodiment 3.
FIG. 23 is a schematic diagram of droplets generated in Embodiment 4.
FIG. 24 is a schematic diagram of droplets generated in Embodiment 5.
FIG. 25 is a schematic diagram of droplets generated in Embodiment 6.
FIG. 26 is a schematic diagram of droplets generated from a first liquid sample at different flow rates and flatly laid at a bottom of a container in Embodiments 7-18.
FIG. 27 is a schematic diagram of a relationship between a volume vs. a theoretical droplet volume of a droplet generated in Embodiments 19-28.
FIG. 28 is a schematic diagram of droplets of different volumes generated at different sample concentrations of human genome in Embodiment 29.
FIG. 29 is a schematic diagram of a relationship between a dPCR quantitative value and a nucleic acid sample concentration after using PCR for amplification in Embodiment 29.

In the figures, 1 - asymmetric vibrating micro-droplet generation mechanism, 100 - vibration assembly, 101 - case, 102 - vibrator, 103 - position sensor, 104 - vibration input rod, 105 - connection guiding member, 106 - spline sleeve, 107 - spline shaft, 1053 - first bearing, 1054 - second bearing, 106 - connecting member, 120 - supporting and fixing receptacle, 200 - first dynamic positioning assembly, 201 - positioning assembly lifting displacement mechanism, 202 - liquid level probing mechanism, 300 - vibrating mount, 301 - sample injector adapter, 302 - pipe joint, 303 - pump pipe holder, 304 - connector, 400 - sample injector, 401 - sample injector liquid supply opening, 402 - sample injector liquid ejecting part, 403 - sample injector liquid ejecting opening, 404 - sample injector liquid storage part, 500 - fluid driving device, 501 - liquid supplying conduit, 502 - liquid sucking conduit, 503 - micro-injector, 504 - oil storage bottle, 505 - carrier liquid, 600 - driving controller, 601 - vibration driving circuit, 602 - asymmetric vibration control program, 603 - position correction module, 604 - position signal acquisition module, 605 - power supply control connecting cable, 700 - second liquid, 701 - second opening container, 702 - liquid level of the second liquid, 703 - first liquid micro-droplet, 800 - first liquid, 801 - first opening container, EP - equilibrium position of vibration, RP1 and RP2 - reflecting positions on both sides of equilibrium position, and 900 - second dynamic positioning assembly.

### Detailed Description of the Embodiments

Typical embodiments embodying the features and advantages of the present disclosure will be described in detail in the following description. It is to be understood that the present disclosure may vary in various embodiments without departing from the scope of the present disclosure, and the description and drawings therein are intended to be illustrative in essence, but not to limit the present disclosure.

In the following description of different exemplary embodiments of the present disclosure, reference is made to the drawings, which constitute part of the present disclosure, and which show, by way of example, different exemplary structures, systems, and steps that may realize various aspects of the present disclosure. It is to be understood that other specific solutions of components, structures, exemplary devices, systems and steps may be used, and that structural and functional modifications may be made without deviating from the scope of the present disclosure. Furthermore, while the terms "upper end", "lower end", "between", "side", etc., may be used in the specification to describe different exemplary features and elements of the present disclosure, these terms are used herein only for the purpose of convenience, such as according to the directions of the embodiments shown in the drawings. None of the contents in the specification shall be construed as requiring a specific three-dimensional direction of the structure to fall within the scope of the present disclosure.

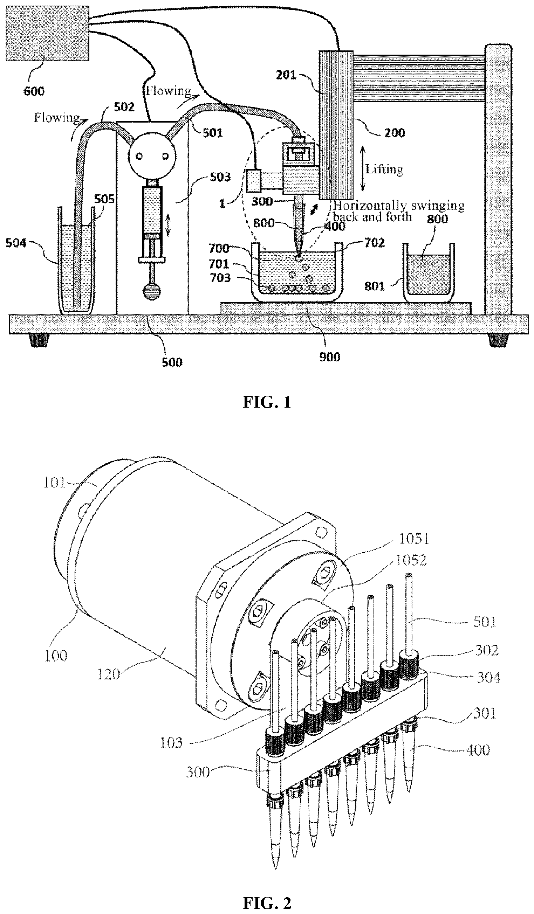

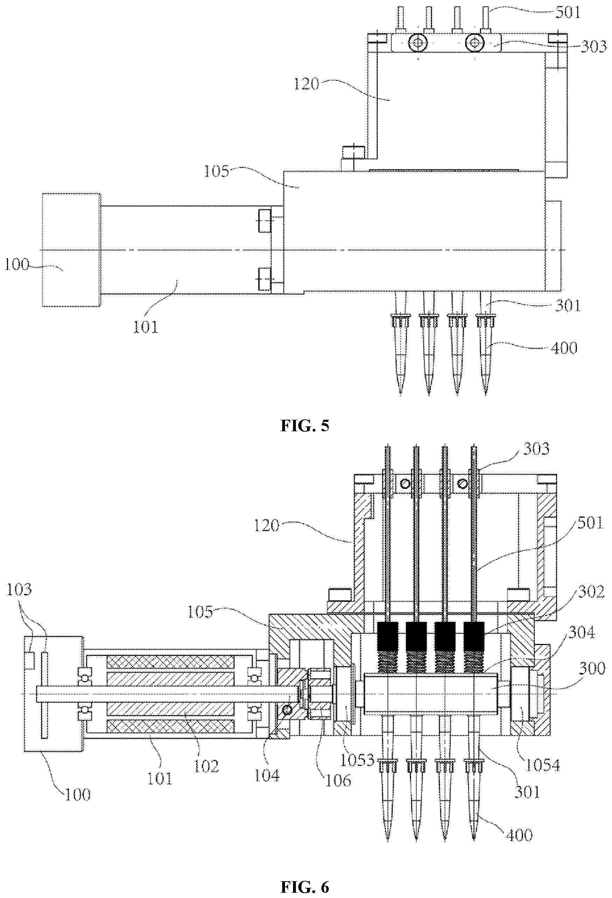

FIG. 1 is a schematic diagram of a structure of a control device for preparing micro-droplets according to the present disclosure. FIGS. 2 to 7 are enlarged views of an asymmetric vibrating micro-droplet generation mechanism 1 in FIG. 1. In FIG. 1, the control device includes a micro-droplet preparation unit. The micro-droplet preparation unit includes an asymmetric vibrating micro-droplet generation mechanism 1 and a first dynamic positioning assembly 200, and the first dynamic positioning assembly 200 is fixedly connected to the asymmetric vibrating micro-droplet generation mechanism 1.

The first dynamic positioning assembly 200 is configured to position the asymmetric vibrating micro-droplet generation mechanism 1.

The asymmetric vibrating micro-droplet generation mechanism 1 is configured to generate micro-droplets through asymmetric reciprocating motion.

The control device further includes a fluid control unit. The fluid control unit includes a fluid driving device 500 and a conduit (not shown in the figure). The conduit has one end connected to the fluid driving device 500 and the other end connected to the asymmetric vibrating micro-droplet generation mechanism 1.

The fluid driving device 500 is configured to set a flow rate for liquid sucking and discharging of a sample injector 400.

The conduit includes a liquid supplying conduit 501 and a liquid sucking conduit 502. The liquid sucking conduit 502 has one end connected to the fluid driving device 500 through one valve port of an electric two-position three-way valve (not shown in the figure) and the other end inserted into an oil storage device (e.g. an oil storage bottle 504). The liquid supplying conduit 501 has one end connected to the fluid driving device 500 through one valve port of the electric two-position three-way switch valve and the other end connected to the micro-droplet generation mechanism 1.

The oil storage bottle 504 contains a carrier liquid 505. The liquid sucking conduit 502, the liquid supplying conduit 501, the electric two-position three-way switch valve, the sample injector adapter and the sample injector 400 are fully filled with the carrier liquid 505 through the fluid driving device 500.

The carrier liquid may be, for example, one or more of liquid alkane, liquid esters, and fluorinated alkane.

In one implementation, only one micro-droplet is generated within one motion period of the asymmetric vibrating micro-droplet generation mechanism.

In one implementation, modes of asymmetric reciprocating motion of the asymmetric vibrating micro-droplet generation mechanism may include asymmetric reciprocating vibration and asymmetric reciprocating swing. The sample injector only generates one micro-droplet within one period of asymmetric reciprocating vibration or asymmetric reciprocating swing of a vibrating mount.

As shown in FIGS. 2 to 7, the micro-droplet generation mechanism 1 includes a vibration assembly 100, a connection guiding member 105, a vibrating mount 300, sample injectors 400 and a driving controller 600.

The vibration assembly 100 includes a case 101, a vibrator 102 and a vibration output rod 104.

The vibration output rod 104 of the vibration assembly 100 is connected to the vibrating mount 300 through the connection guiding member 105 to power the vibrating mount 300.

The vibrating mount 300 is provided with connectors 304, pipe joints 302 and sample injector adapters 301.

Each of the connectors 304 has one end connected to a corresponding liquid supplying conduit 501 via a corresponding pipe joint 302 and the other end connected to a corresponding sample injector 400 through a sample injector adapter.

Central axes of the sample injectors 400 are perpendicular to an axis of the vibration output rod 104.

The driving controller 600 is electrically connected to the vibration assembly 100, and drives the vibrating mount 300 to make asymmetric reciprocating motion according to an asymmetric motion control program 602, so that the sample injectors generate micro-droplets.

In one implementation, the driving controller 600 includes a vibration driving circuit 601, an asymmetric vibration control program 602, a position correction module 603, a position signal acquisition module 604 and a power supply control connecting cable 605. The driving controller 600 is electrically connected to the vibration assembly 100, and drives the vibrating mount 300 to make asymmetric reciprocating motion according to the asymmetric motion control program 602.

In one implementation, said asymmetric reciprocating motion is asymmetric reciprocating vibration of the vibrating mount 300 in a direction of the central axis of the vibration output rod 104.

In one implementation, the connection guiding member 105 is a ball spline 105 including a spline shaft 1052 and a spline sleeve 1051. Ends of the spline shaft 1052 are fixedly connected to the vibration output rod 104 and the vibrating mount 300, respectively. Connection between the spline shaft 1052 and the vibration output rod 104 are enabled through a connecting member 106. In one implementation, the connecting member 106 is a screw.

In one implementation, the vibration assembly 100 supplies power to the vibrating mount 300 for asymmetric reciprocating motion, and is a vibration assembly that is capable of producing continuous or intermittent motion, which is one selected from electromagnetic vibration device, piezoelectric ceramic vibration device, eccentric wheel type vibration device, a servo motor, a voice coil motor, and a galvanometer motor. In the preparation of micro-droplets, a vibration frequency and a vibration amplitude specifically used in a vibration device may be selected according to practical needs. For example, the vibration assembly 100 has a vibration frequency ranging from 10 to 1000 Hz, preferably, 50 to 200 Hz, and has a vibration amplitude ranging from 0.1 to 5 mm, preferably, 0.5 to 2 mm.

The connection guiding member 105 (ball spline) can restrain the motion of the vibrating mount 300, so that the vibrating mount 300 can only make reciprocating motion in a direction of a central axis of the ball spline 105. Upon a specific practical application of the micro-droplet generation mechanism in the present disclosure, the vibration output rod 104 generates no vibration outside the direction of the central axis of the vibration output rod 104 or the ball spline 105 while bearing a radial force perpendicular to an axial direction of the vibration output rod 104 that is produced by weights of the vibrating mount 300 and the sample injectors 400 loaded on the vibration output rod 104 and a torque force produced by unbalanced weights at the two ends of the vibrating mount 300, so that the vibrating mount 300 can only make reciprocating motion in the direction of the central axis of the ball spline 105, thus ensuring the stability and uniformity of micro-droplet generation.

The other end of the connection guiding member 105 is connected to the vibrating mount 300, that specifically is, one end of the spline shaft 1052 is connected to the vibrating mount 300.

In one implementation, the vibration assembly 100 further includes a position sensor 103. The driving controller 600 acquires a real-time position feedback signal from the position sensor 103 through the position signal acquisition module 604, and feeds a real-time comparison between the real-time position feedback signal and the asymmetric motion control program back to the position correction module 603 to regulate a control parameter of the vibration driving circuit 601, thus realizing closed-loop control of the asymmetric reciprocating motion.

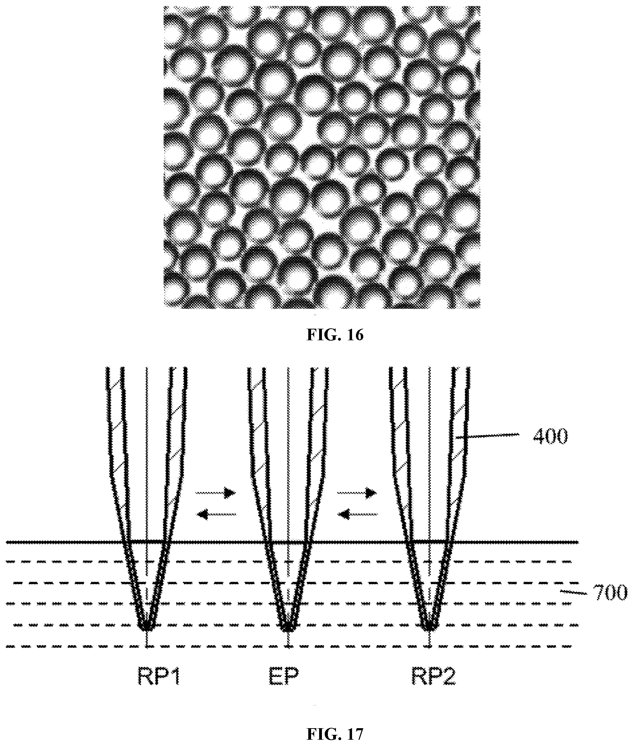

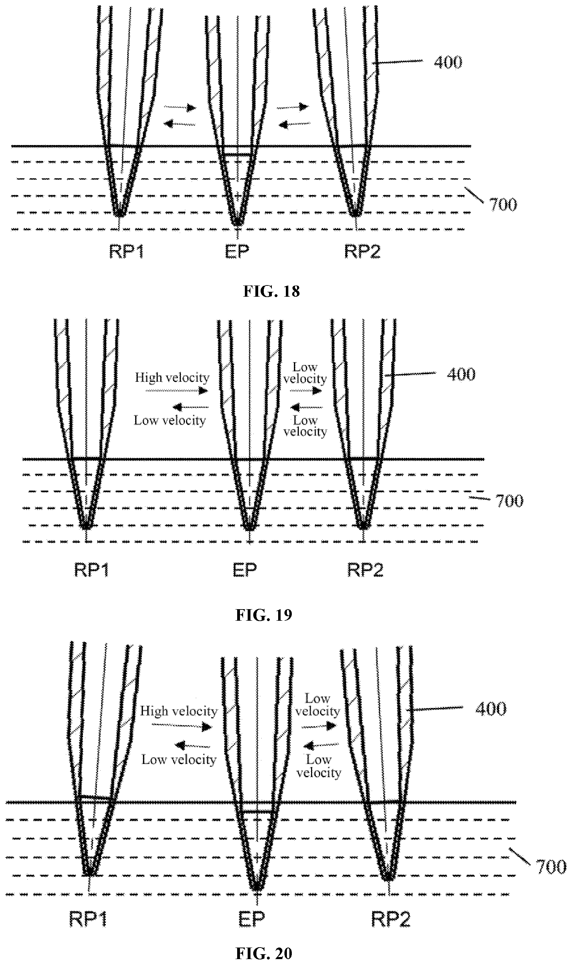

The vibration assembly 100 in the present disclosure makes periodic asymmetric reciprocating motion, and has one equilibrium point (EP) and two reflecting-points, i.e., RP1 and RP2, at both ends of the equilibrium point. The so-called asymmetric reciprocating motion defines one vibration period as a passage starting from the reflecting-point RP1 via the equilibrium point EP to the reflecting-point RP2 and then returning from the reflecting-point RP2 via the equilibrium point EP to the reflecting-point RP1. FIG. 17 is a schematic diagram of vibration positions of a micro-droplet generation mechanism making asymmetric reciprocating vibration provided by the present disclosure, in which EP is located in the center of RP1 and RP2, that is, EP is equidistant from RP1 and RP2 both. FIG. 18 is a schematic diagram of swing positions of a micro-droplet generation mechanism making asymmetric swing provided by the present disclosure, in which EP is located in the center between RP1 and RP2, that is, EP is equidistant from RP1 and RP2 both. FIG. 19 is a schematic diagram of vibration positions of a micro-droplet generation mechanism making asymmetric reciprocating vibration provided by the present disclosure, in which EP is not equidistant from RP1 and RP2. FIG. 20 is a schematic diagram of vibration positions of a micro-droplet generation mechanism making asymmetric swing provided by the present disclosure, in which EP is not equidistant from RP1 and RP2.

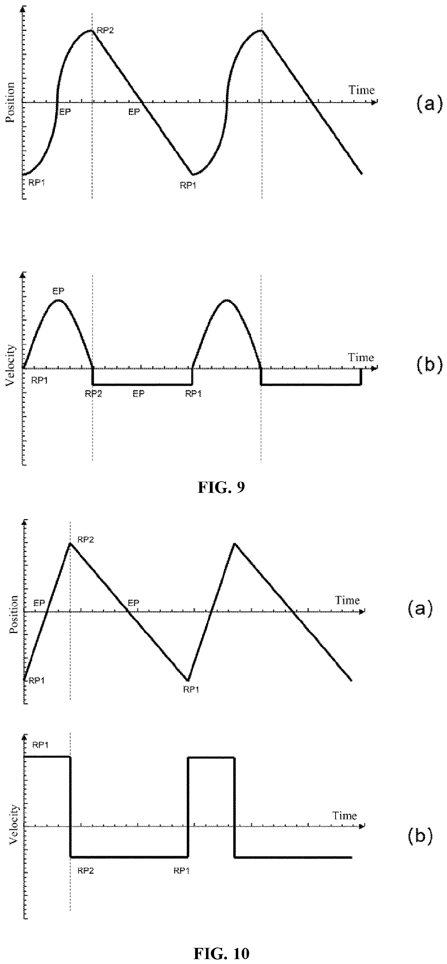

In one implementation, according to the vibration assembly making asymmetric reciprocating motion in the present disclosure, EP is located in the center of RP1 and RP2, and a curve is plotted by making a horizontal axis of time and a vertical axis of vibration position, with the position of the equilibrium point EP being as 0. The vibration position versus time curve is asymmetric at the both sides of any reflecting-point (RP1 or RP2) (FIGS. 9, 10 and 11). Such periodic asymmetric reciprocating motion makes an liquid ejecting opening of the sample injector reach its maximum motion velocity only at one time point or during one time period within two half periods of motion, so that an oil-phase shear force at the liquid ejecting opening is varying. That is, in the process of periodic motion, the liquid ejecting opening only has one time point to be applied with the maximum shear force within one period. In one implementation, according to the vibration assembly making asymmetric reciprocating motion in the present disclosure, EP is not equidistant from RP1 and RP2, and the periodic asymmetric reciprocating motion makes the liquid ejecting opening of the sample injector reach its maximum motion velocity only at one time point or during one time period within two half periods of motion (FIGS. 19 and 20). That is, in the process of periodic motion, the liquid ejecting opening only has one time interval to be applied with the maximum shear force within one period. Compared with the asymmetric reciprocating motion in the present disclosure, it is also possible to generate droplets through left-right symmetric reciprocating vibration under a liquid level. However, the vibration assembly has two points to be applied with the maximum force within one full period. That is, the vibration assembly might generate droplets within both half periods, in other words, it might generate one small droplet within every half period or one large droplet of twice the volume within the full period. As a result, there is a large uncertainty in droplet size. Besides, openings of micro-pipelines machined by injection molding, etc., are, in fact, unable to be completely symmetric (as shown in FIGS. 8d, 8e and 8f), resulting in size difference between the droplets generated within the two half periods. Therefore, using the asymmetric reciprocating vibration, the present disclosure solves the foregoing problems of nonuniformity of droplet generation by symmetric reciprocating vibration as well as excessively high requirements for the symmetry, precision and flaws of the machining of the liquid ejecting opening, so that highly controllable uniform droplets can be generated.

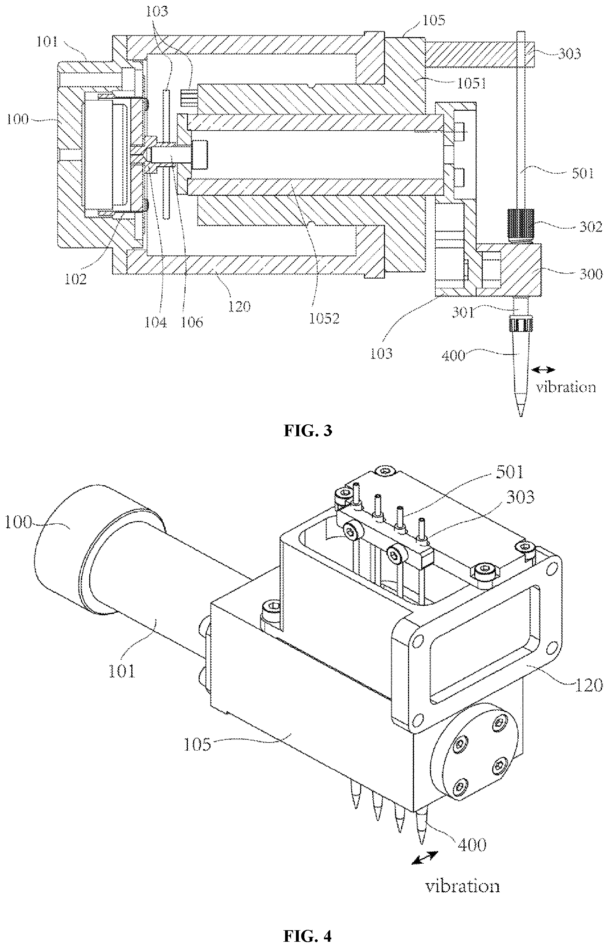

Various forms of asymmetric reciprocating motion may be adopted. In one implementation, the asymmetric reciprocating motion is asymmetric reciprocating vibration in the direction of the central axis of the vibration output rod. That is, the vibration assembly 100 can only make reciprocating vibration in the direction of the central axis of the vibration output rod 104. In one implementation, the asymmetric reciprocating motion is asymmetric reciprocating swing with the central axis of the vibration output rod 104 as an axis. FIGS. 2 and 3 are schematic diagrams of the micro-droplet generation mechanism making asymmetric reciprocating vibration in the direction of the central axis of the vibration output rod.

In one implementation, the asymmetric reciprocating motion is asymmetric reciprocating swing of the vibrating mount with the central axis of the vibration output rod as an axis. As shown in FIGS. 4 to 7, they are schematic diagrams of the micro-droplet generation mechanism making asymmetric swing with the central axis of the vibration output rod 104 as an axis. The vibration assembly 100 includes a case 101, a vibrator 102, a position sensor 103 and a vibration output rod 104. The vibration output rod 104 of the vibration assembly 100 is connected to the vibrating mount 300 through the connection guiding member 105 and the connecting member 106 to supply power to the vibrating mount 300 for reciprocating motion. Central axes of the sample injectors 400 are perpendicular to the axis of the vibration output rod 104.

The connection guiding member 105 can restrain the motion of the vibrating mount 300, so that the vibrating mount 300 fixed on the vibration output rod 104 can only make asymmetric swing with the central axis of the vibration output rod 104 as an axis. The connection guiding member 105 includes a first bearing 1053 and a second bearing 1054, and the vibrating mount 300 has one end running through the first bearing 1053 and connected to the connection guiding member 105 and the other end connected to the second bearing 1054. In this case, the first bearing 1053 is a bearing having an axial stop edge. In one implementation, the connecting member 106 is a coupling. The first bearing 1053 having the axial stop edge makes the vibrating mount 300 not move in the axial direction of the vibration output rod 104, and the combined use of the first bearing 1053 and the second bearing 1054 ensures the structural stability of the vibration assembly and the stability and the uniformity of micro-droplet generation.

The vibration assembly 100 supplies power to the vibrating mount 300 for asymmetric reciprocating motion, and is a mechanism that is capable of producing continuous or intermittent motion, which is one selected from electromagnetic vibration device, piezoelectric ceramic vibration device, eccentric wheel type vibration device, a servo motor, a voice coil motor, and a galvanometer motor. In the preparation of micro-droplets, a vibration frequency and a vibration amplitude, or a swing amplitude or swing specifically used in a vibration device may be selected according to practical needs. In one implementation, a vibration frequency ranges from 10 to 1000 Hz, preferably, 50 to 200 Hz. In one implementation, the vibration deice has a vibration amplitude ranging from 0.1 to 5 mm, preferably, 0.5 to 2 mm. In one implementation, a swing frequency ranges from 10 to 1000 Hz, preferably, 50 to 200 Hz. In one implementation, a distance between liquid ejecting openings of the sample injectors and the axis of the vibration output rod ranges from 10 to 100 mm, preferably, 30 to 80 mm; and the vibrating mount has a swing range ranging from 0.05° to 10°, preferably, 0.2° to 2°.

The vibrating mount 300 in the present disclosure is a fixing device for the sample injectors 400, and transmits a driving force of the vibration assembly 100 to a liquid loaded in the sample injectors 400, thus generating micro-droplets. The central axes of the sample injectors 400 are perpendicular to the axis of the vibration output rod 104.

Specifically, the vibrating mount 300 is provided with a connector 304, and the connector 304 has one end connected to a liquid supplying conduit 501 via a pipe joint 302 and the other end connected to a sample injector 400 through a sample injector adapter 301.

The connector 304 is through groove and serves to connect the liquid supplying conduit 501 to the sample injector 400. According to actual application needs, the number of the connector 304 is one or more, for example, from 1 to 96. The plurality of connectors 304 are provided inside the vibrating mount 300 at equal intervals. Preferably, the number of the connectors 304 is 2, 4, 8, or 12.

As shown in FIGS. 8a and 8b, each of the sample injectors 400 is of a conical pipe-shaped structure with openings at both ends. The opening at one end is a liquid supply opening 401 for tight insertion with the sample injector adapter 301, so that the sample injector 400 keeps airtight connection with the sample injector adapter 301. The opening at the other end is a sample injector liquid ejecting part 402, including a sample injector liquid ejecting opening 403 for micro-droplet generation. The sample injector liquid ejecting opening 403 has an inner diameter ranging from 20 to 300 µm and an outer diameter ranging from 150 to 600 µm. Middle portion of the sample injector is a liquid storage cavity 404, which is configured to store a first liquid 800. A volume of the liquid storage cavity 404 of the sample injector 400 ranges from 5 to 500 µL, preferably, 20 to 60 µL. FIGS. 8c-f are configurations of a liquid ejecting part 402 of a sample injector 400 adapted to the asymmetric reciprocating motion mechanism for micro-droplet generation provided by the present disclosure. FIG. 8c shows a configuration under an ideal situation of a left-right symmetric liquid ejecting part without a burr machined. By utilizing the asymmetric reciprocating vibration of the micro-droplet generation mechanism in the present disclosure, it is possible to be compatible with the defects of the configuration of the sample injector liquid ejecting part 402, including left-right asymmetry (FIG. 8d), the presence of a burr on the outer edge of the liquid ejecting opening (FIG. 8e), and the presence of a burr on the inner edge of the liquid ejecting opening (FIG. 8f). The machining defects have a scale of size of ten to one hundred micrometers, and cannot be completely avoided under existing machining conditions, thus producing an adverse impact on the uniformity of droplet preparation.

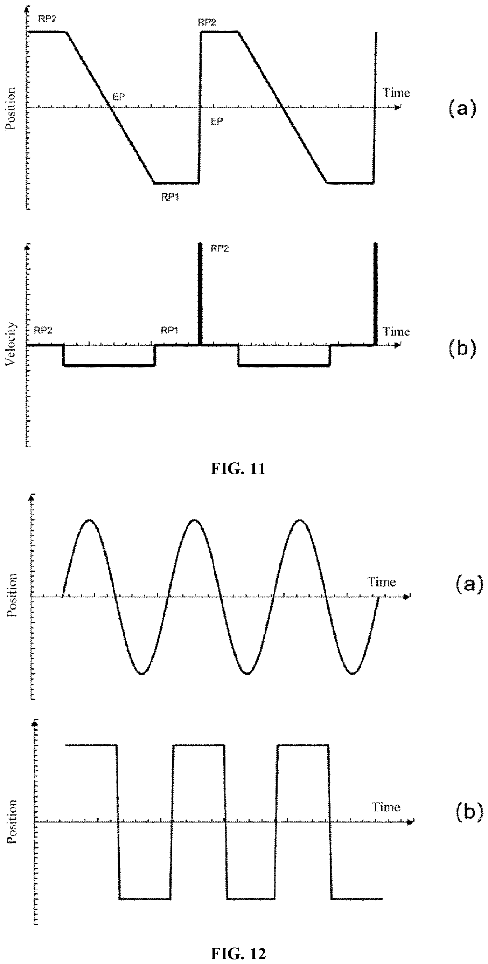

As shown in FIGS. 9 to 11, a position of the liquid ejecting opening of the sample injector 400 swings left and right about a vibration center, a curve of the position of the liquid ejecting opening 403 varying with time may be presented in various forms, such as one of sine wave, sawtooth wave, trapezoidal wave, triangular wave, and square wave, or a superimposed combination of these various waveforms. In one implementation, the curve of the position of the liquid ejecting opening of the sample injector 400 varying with time is in a form of a combination of sine wave and sawtooth wave (as shown in FIG. 9a), and a periodic velocity-time curve of the liquid ejecting opening of the sample injector 400 is also shown in FIG. 9b. In one implementation, the curve of the position of the liquid ejecting opening of the sample injector 400 varying with time is in a form of a combination of short-period sawtooth wave and long-period sawtooth wave, as shown in FIG. 10a, and the periodic velocity-time curve of the liquid ejecting opening of the sample injector 400 is shown in FIG. 10b. In one implementation, the curve of the position of the liquid ejecting opening of the sample injector 400 varying with time is in a form of a combination of square wave and sawtooth wave (as shown in FIG. 11a), and the periodic velocity-time curve of the liquid ejecting opening of the sample injector 400 is shown in FIG. 11b.

The above waveforms are characterized in that the velocity variation curve of the liquid ejecting opening 400 of the sample injector 400 is asymmetric between a half stroke from left to right and a half stroke from right to left, and there is a maximum instantaneous velocity greater than an average velocity or a maximum velocity interval within one vibration period. Under the action of the asymmetric reciprocating motion, the liquid ejecting opening of the sample injector 400 generates one droplet within one reciprocating vibration period, and the generation of the droplet is controlled by the maximum instantaneous velocity or the maximum velocity interval within the reciprocating vibration cycle period, thus achieving the extremely high stability and reliability.

In one implementation, the vibrating generation mechanism in the present disclosure further includes a supporting and fixing receptacle 120 for fixing the vibration assembly 100 so as to implement operations such as automatic sample injector loading, moving, droplet preparation.

In one implementation, the vibrating generation mechanism in the present disclosure further includes a pump pipe holder 303 (see FIGS. 3, 4, 5, 6 and 7) for holding the liquid supplying conduit 501. Specifically, in use, the pump pipe holder 303 can keep the liquid supplying conduit 501 vertical, thus ensuring the stability of liquid supplying and making the generated micro-droplets stable and uniform.

In one implementation, the first dynamic positioning assembly 200 includes a positioning assembly lifting displacement mechanism 201, which is configured to control lifting and precise positioning of the micro-droplet generation mechanism 1.

The first dynamic positioning assembly 200 further includes a liquid level probing mechanism 202 to assist the first dynamic positioning assembly 200 to precisely position the opening of the sample injector to a fixed depth below a liquid level of the second liquid 702 inside a second opening container 701, and make dynamic height position adjustment under the control of the control device when a height of the liquid level is changing due to the continuous generation of the droplets or when there is an error in the height of the liquid level that is brought about by an error in volume adding of the second liquid, so as to ensure the long-time stability and uniformity of droplet generation.

The liquid level probing mechanism 202 may be, for example, a high-definition CCD camera, a reflective photoelectric sensor, or a capacitive distance sensor.

In one implementation, the control device further includes a second dynamic positioning assembly 900, which is a precise two-axis horizontal translation stage and is configured to fix and move a first opening container and a second opening container.

In one implementation, the driving controller 600, in addition to driving and controlling the asymmetric vibrating micro-droplet generation mechanism 1, also drives and controls the fluid driving device 500, the first dynamic positioning assembly 200 and the second dynamic positioning assembly 900 to cooperate with the asymmetric vibrating micro-droplet generation mechanism 1.

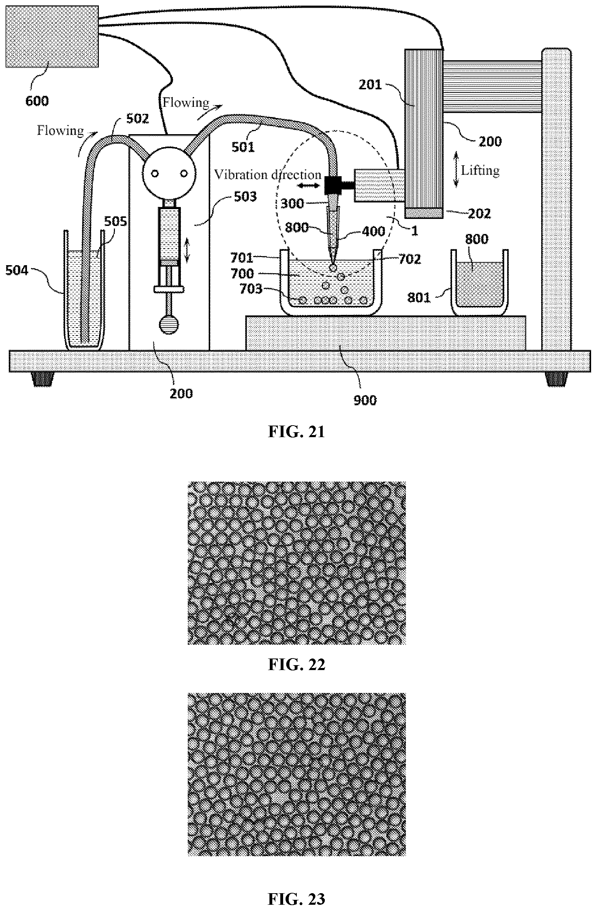

In one implementation, the first opening container 801 (FIGS. 1 and 21) contains a first liquid 800.

The first liquid may be, for example, a polymerase chain reaction (PCR) agent, a reverse transcription PCR (RT-PCR) agent, a microbial suspension, a cell suspension, and the like.

The first opening container is a single liquid storage tank, a one-dimensional liquid storage tank array, or a two-dimensional liquid storage tank array, preferably, PCR 8-strip tubes, more preferably, a standard 96 or 384-well ELISA plate or PCR plate. The liquid storage tank may be flat-bottomed, round-bottomed or cone-bottomed, and has a capacity ranging from 10 to 1000 µL, preferably, 20 to 200 µL.

For example, each first opening container may have a capacity of 10 µL, 20 µL, 30 µL, 40 µL, 50 µL, 60 µL, 70 µL, 80 µL, 90 µL, 100 µL, 200 µL, 300 µL, 400 µL, 500 µL, 600 µL, 700 µL, 800 µL, 900 µL, 1000 µL, etc.

As shown in FIGS. 1 and 21, a second liquid 700 is preloaded in the second opening container 701, and the second liquid has a specific gravity less than the first liquid. The second opening container is a two-dimensional flat-bottomed sample tank array for flatly laying the generated micro-droplets. Preferably, the second opening container includes 24, 32, 96 or 384 flat-bottomed sample tanks with equal capacities, and the flat-bottomed sample tanks have a rectangular or circular shape.

The second liquid is one or more of liquid alkane or liquid esters containing a surfactant. The surfactant is one or more of a Triton-series surfactant, a Tween-series surfactant, a Nonidet-series surfactant, a Pluronic-series surfactant, a Span-series surfactant, a Brij-series surfactant, a IGEPAL-series surfactant, and a ABIL EM/WE-series surfactant.

The Triton-series surfactant may be, for example, Triton X-100, Triton X-405, Triton X-114, etc.

The Tween-series surfactant may be, for example, Tween 40, Tween 60, Tween 65, Tween 80, Tween 85, etc.

The Nonidet-series surfactant may be, for example, P40.

The Pluronic-series surfactant may be, for example, Pluronic F-68.

The Span-series surfactant may be, for example, Span 20, Span 40, Span 60, Span 80, Span 85, etc.

The Brij-series surfactant may be, for example, Brij 30, Brij 35, Brij 58, Brij 97 etc.

The IGEPAL-series surfactant may be, for example, IGEPAL CO-630, IGEPAL CO-730, IGEPAL CO-520, IGEPAL CO-897, etc.

The ABIL EM/WE-series surfactant may be, for example, ABIL EM 97, ABIL WE 09, etc.

In one implementation, the sample injector adapter is of a conical pipe-shaped structure with an opening at one end, and the sample injector adapter is configured to be inserted into the sample injector.

Preferably, the sample injector adapter includes a liquid supplying conduit connection, a connecting cavity and a liquid outlet.

Preferably, the connecting cavity has an inner diameter ranging from 0.5 to 1.5 mm, preferably, 1 mm.

Preferably, the connecting cavity has an outer diameter ranging from 2 to 4 mm, preferably, 2 to 3 mm.

The connecting cavity has a length ranging from 10 to 50 mm, preferably, 15 to 25 mm.

In one implementation, the number of the sample injector adapter ranges from 1 to 96, preferably, 2, 4, 8, or 12.

In one implementation, the fluid driving device is a pulsation-free driving pump, preferably, an injection pump.

The number of the fluid driving device is one or more.

In one implementation, the liquid supplying conduit 501, the liquid sucking conduit 502, the electric two-position three-way switch valve and the sample injector adapter 301 are fully filled with a carrier liquid 505 without bubbles.

In one implementation, the control device further includes a preparing unit (not shown in the figure). The preparing unit includes a sample injector rack, an oil removing mechanism, a sample injector unloading mechanism and a waste receptor. The oil removing mechanism is located above the waste receptor. The sample injector is unloaded above the waste receptor.

With respect to the sample injector rack, the oil removing mechanism, the sample injector unloading mechanism and the waste receptor, the present disclosure does not impose any limitations thereto, and a person skilled in the art may make a choice as desired. For example, the oil removing mechanism may be a sponge.

The present disclosure provides a method for preparing micro-droplets using the above control device, which may include the following steps:
driving a conduit, a sample injector adapter and a sample injector by a fluid driving device to fully fill a sample injector with a first liquid; and
placing an opening of the sample injector fully filled with the first liquid below a liquid level of a second liquid to make contact with the second liquid, and driving, by the micro-droplet generation mechanism under driving of the fluid driving device, the sample injector adapter to drive the sample injector to make asymmetric reciprocating motion below the liquid level of the second liquid, so as to generate a first liquid micro-droplet.

In one embodiment, the sample injector makes asymmetric reciprocating vibration or asymmetric swing below the liquid level of the second liquid, and the fluid driving device is configured to set a flow rate to discharge the first liquid from the sample injector so as to generate the micro-droplet.

In one embodiment, only one micro-droplet is generated within one period of the asymmetric reciprocating motion by the sample injector below the liquid level of the second liquid.

In one embodiment, before driving a conduit, a sample injector adapter and a sample injector using a fluid driving device to fully fill a sample injector with a first liquid, the method may further include one or more of the following steps:
a) moving the sample injector adapter to the oil removing mechanism, driving, by the fluid driving device, the liquid sucking conduit to suck a carrier liquid, switching the electric two-position three-way switch valve, discharging, by the fluid driving device, the carrier liquid from the sample injector adapter, fully filling the liquid sucking conduit, the liquid supplying conduit, the electric two-position three-way switch valve and the sample injector adapter with the carrier liquid without bubbles, and at the same time, removing, by the oil removing mechanism, the excess carrier liquid discharged from the opening at a lower end of the sample injector adapter;
b) inserting the sample injector adapter fully filled with the carrier liquid into the sample injector, so that the sample injector and the sample injector adapter are connected in an inserted manner; and
c) moving the sample injector to the oil removing mechanism, switching the electric two-position three-way switch valve, repeating step a) to fully fill the liquid sucking conduit, the liquid supplying conduit, the electric two-position three-way switch valve, the sample injector adapter and the sample injector with the carrier liquid without bubbles, and at the same time, removing, by the oil removing mechanism, the excess carrier liquid discharged from the opening of the sample injector.

In one embodiment, the step of driving a conduit, a sample injector adapter and a sample injector using a fluid driving device to fully fill a sample injector with a first liquid may include:
moving the sample injector in step c) to a position above a liquid level of the first opening container containing the first liquid, and moving the same downwards to make the liquid outlet of the sample injector contact with and immersed in the first liquid, and switching the electric two-position three-way switch valve to suck the first liquid into the sample injector, so that the sample injector is fully filled with the first liquid.

In one embodiment, the method may include:
a) moving the sample injector adapter to the oil removing mechanism, driving, by the fluid driving device, the liquid sucking conduit to suck a carrier liquid, switching the electric two-position three-way switch valve, discharging, by the fluid driving device, the carrier liquid from the sample injector adapter, fully filling the liquid sucking conduit, the liquid supplying conduit, the electric two-position three-way switch valve and the sample injector adapter with the carrier liquid without bubbles, and at the same time, removing, by the oil removing mechanism, the excess carrier liquid discharged from the opening at a lower end of the sample injector adapter;
b) inserting the sample injector adapter fully filled with the carrier liquid into the sample injector, so that the sample injector and the sample injector adapter are connected in an inserted manner;
c) moving the sample injector to the oil removing mechanism, switching the electric two-position three-way switch valve, repeating step a) to fully fill the liquid sucking conduit, the liquid supplying conduit, the electric two-position three-way switch valve, the sample injector adapter and the sample injector with the carrier liquid without bubbles, and at the same time, removing, by the oil removing mechanism, the excess carrier liquid discharged from the opening of the sample injector;
d) moving the sample injector in step c) to a position above a liquid level of the first opening container containing the first liquid, and moving the same downwards to make the liquid outlet of the sample injector contact with and immersed in the first liquid, switching the electric two-position three-way switch valve, and repeating step a) to suck the first liquid into the sample injector;
e) moving the sample injector in step d) away from the first opening container, and moving the same to a position above the second opening container containing a second liquid, and moving the same downwards to make the liquid outlet of the sample injector contact with and immersed in the second liquid; and
f) discharging, under driving of the fluid driving device, the first liquid in the sample injector from the liquid outlet of the sample injector, at the same time, driving, by the micro-droplet generation mechanism, the sample injector adapter to drive the sample injector to make asymmetric vibration or asymmetric swing below a liquid level of the second liquid, and separating the discharged first liquid from the liquid outlet of the sample injector to generate a micro-droplet.

In one implementation, a volume of the sample sucked by the liquid outlet of the sample injector is less than a capacity of a cavity connecting to the sample injector to prevent the sucked first liquid from contaminating the liquid supplying conduit.

In one implementation, the method further includes: unloading the sample injector after completing micro-droplet preparation of the first liquid, and then inserting another sample injector for micro-droplet preparation of another first liquid according to the steps b) to f).

According to the present disclosure, micro-droplets are prepared using the above device. The vibration assembly of the micro-droplet generation mechanism drives a liquid ejecting opening of the sample injector on the vibrating mount to make acceleration-variable periodic reciprocating motion between two points below a liquid level of an oil phase or between two points across the liquid level of the oil phase. In this way, the micro-droplets having a uniform size and a controllable volume can be prepared only by regulating a flow rate of a water-phase liquid inside the sample injector and a vibration frequency of the sample injector.

### Embodiment 1

As shown in FIG. 1, the control device includes a micro-droplet preparation unit. The micro-droplet preparation unit includes an asymmetric vibrating micro-droplet generation mechanism 1 and a first dynamic positioning assembly 200, and the first dynamic positioning assembly 200 is fixedly connected to the asymmetric vibrating micro-droplet generation mechanism 1. The first dynamic positioning assembly 200 is configured to position the asymmetric vibrating micro-droplet generation mechanism 1.

The asymmetric vibrating micro-droplet generation mechanism 1 is configured to generate a micro-droplet through asymmetric reciprocating motion.

The control device may further include a fluid control unit (not shown in the figure). The fluid control unit includes a fluid driving device 500, a liquid supplying conduit 501, a liquid sucking conduit 502 and an electric two-position three-way switch valve. One valve port of the electric two-position three-way switch valve is connected to the fluid driving device, a second valve port is connected to one end of the liquid supplying conduit 501, and a third valve port is connected to one end of the liquid sucking conduit 502. The other end of the liquid sucking conduit 502 is connected to an oil storage bottle 504. The other end of the liquid supplying conduit 501 is connected to the micro-droplet generation mechanism 1.

The first dynamic positioning assembly 200 includes a positioning assembly lifting displacement mechanism 201, and the micro-droplet generation mechanism 1 is fixedly connected to the positioning assembly lifting displacement mechanism 201 of the first dynamic positioning assembly 200.

The first dynamic positioning assembly 200 may further include a liquid level probing mechanism 202 to assist the first dynamic positioning assembly to precisely position an opening of a sample injector to a depth of 0.3 mm below (FIG. 21) a liquid level of the second liquid 702 in a second opening container 701.

The control device further includes a second dynamic positioning assembly 900, which is configured to fix and move a first opening container 801 and the second opening container 701.

The first opening container 801 is a single liquid storage tank and contains a first liquid.

The second opening container 701 is a two-dimensional flat-bottomed sample tank array for flatly laying the generated micro-droplets.

The control device may further include a preparing unit (not shown in the figure). The preparing unit includes a sample injector rack, an oil removing mechanism (a sponge), a sample injector unloading mechanism and a waste receptor. The oil removing mechanism (the sponge) is located above the waste receptor. The sample injector is unloaded above the waste receptor.

In this case, the micro-droplet generation mechanism is as shown in FIG. 7, and includes a vibration assembly 100, a connection guiding member 105, a vibrating mount 300, sample injectors 400 and a driving controller 600.

As shown in FIGS. 2 and 3, the micro-droplet generation mechanism in the present embodiment makes asymmetric reciprocating vibration in a direction of a central axis of a vibration output rod. The micro-droplet generation mechanism includes a vibration assembly, a connection guiding member 105, a supporting and fixing receptacle 120, a vibrating mount 300, sample injectors 400 and pump pipe holders 303. The vibration assembly 100 includes a case 101, a vibrator 102, a position sensor 102 and the vibration output rod 104. The vibration output rod 104 has one end connected to the case 101 and the other end connected to one end of the connection guiding member 105 via a connecting member 106, and the other end of the connection guiding member 105 is connected to the vibrating mount 300. Central axes of the sample injectors 400 are perpendicular to the axis of the vibration output rod 104. The supporting and fixing receptacle 120 is configured to fix the vibration assembly 100.

In this case, the connection guiding member 105 is a ball spline including a spline shaft 1052 and a spline sleeve 1051, and ends of the spline shaft 1052 are fixedly connected to the vibration output rod 104 and the vibrating mount 300, respectively. Connection between the spline shaft 1052 and the vibration output rod 104 is enabled by means of the connecting member 106. The connecting member is a screw. A part of the position sensor 103 is connected to the vibrator and moves along with the vibrator or the vibration output rod, and the other part is fixed to the spline sleeve 1052 and is capable of precisely detecting a displacement in the process of vibration.

The vibration assembly 100 is a vibration motor. The vibrator 102 has a vibration frequency ranging from 100 to 200 Hz and a vibration amplitude ranging from 0.1 to 5 mm. In a practical application, the amplitude ranges from 0.5 to 1.5 mm.

The vibrating mount 300 is provided with connectors 304, and each of the connectors 304 has one end connected to a liquid supplying conduit 501 via a pipe joint 302 and the other end connected to a sample injector 400 by means of a sample injector adapter 301. There are eight connectors 304, which are provided inside the vibrating mount 300 at equal intervals. The pump pipe holders 303 are configured to hold the liquid supplying conduits 501 to keep the liquid supplying conduits 501 vertical.

The driving controller 600 includes a vibration driving circuit 601, an asymmetric vibration control program 602, a position correction module 603, a position signal acquisition module 604 and a power supply control connecting cable 605. The driving controller 600 is electrically connected to the vibration assembly 100, and drives the vibrating mount 300 to make asymmetric reciprocating motion according to the asymmetric motion control program 602. The driving controller 600 acquires a real-time position feedback signal from the position sensor 103 through the position signal acquisition module 604, and feeds a real-time comparison between the real-time position feedback signal and the asymmetric motion control program back to the position correction module 603 to regulate a control parameter of the vibration driving circuit 601, thus realizing closed-loop control of the asymmetric reciprocating motion.

The driving controller 600 is further electrically connected to the first dynamic positioning assembly 200, the second dynamic positioning assembly 900 and the fluid driving device 500 to supply power thereto respectively. The driving controller 600 controls the first dynamic positioning assembly 200 to make dynamic height position adjustment when a height of the liquid level is changing due to the continuous generation of the droplets or when there is an error in the height of the liquid level that is brought about by an error in volume adding of the second liquid, so as to ensure the long-time stability and uniformity of droplet generation.

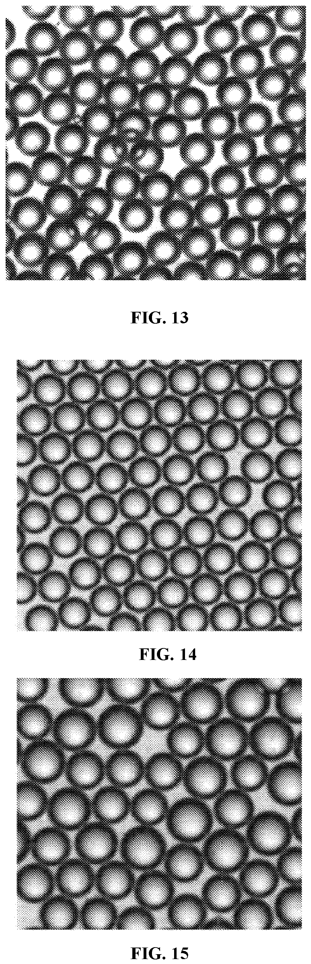

A method for preparing micro-droplets using the above control device may include the following steps:
a) moving the sample injector adapter to the sponge, driving, by an injection pump, the liquid sucking conduit to suck a carrier liquid, switching the electric two-position three-way switch valve, discharging, by the injection pump, the carrier liquid from the sample injector adapter to fully fill the liquid sucking conduit, the liquid supplying conduit, the electric two-position three-way switch valve and the sample injector adapter with the carrier liquid without bubbles, and at the same time, removing, by the sponge, the excess carrier liquid discharged from an opening at a lower end of the sample injector adapter, wherein said carrier liquid is a second liquid that is not miscible with a sample liquid, and the carrier liquid is oil with hydrocarbon, fluorosilicon or fluorocarbon as a main component, such as a mineral oil, tetradecane, FC40, etc.;
b) inserting the sample injector adapter fully filled with the carrier liquid into the sample injector so that the sample injector and the sample injector adapter are connected in an inserted manner, wherein the sample injector has a liquid storage volume of 60 µL, the sample injector is prepared from polypropylene (PP, having a pure-water contact angle of 88°), and a liquid ejecting opening of the sample injector 400 has an inner diameter of 120 µm and an outer diameter of 400 µm;
c) moving the sample injector to the sponge, switching the electric two-position three-way switch valve, repeating step a) to fully fill the liquid sucking conduit, the liquid supplying conduit, the electric two-position three-way switch valve, the sample injector adapter and the sample injector with the carrier liquid without bubbles, and at the same time, removing, by the sponge, the excess carrier liquid discharged from the opening of the sample injector;
d) moving the sample injector in step c) to a position above a liquid level of a first opening container containing a first liquid, and moving the same downwards to make a liquid outlet of the sample injector contact with and immersed in a water solution (the first liquid), switching the electric two-position three-way switch valve, and repeating the step a) to suck 20 µL the first liquid into the sample injector;
e) moving the sample injector in the step d) away from the first opening container, and moving the same to a position above a second opening container containing mineral oil (a second liquid), and driving, by the first dynamic positioning assembly, the asymmetric vibrating micro-droplet generation mechanism to move downwards to make the liquid outlet of the sample injector contact and immersed 0.3 mm below a liquid level of the mineral oil; and
f) discharging, under driving of the injection pump, the first liquid inside the sample injector out of the liquid outlet of the sample injector, implementing, by the driving controller 600, driving control for the sample injector to make asymmetric periodic reciprocating motion below or across the liquid level of the second liquid, and driving, by the vibration motor in the micro-droplet generation mechanism, the sample injector adapter to drive the liquid ejecting opening of the sample injector to make asymmetric reciprocating motion, wherein a position-time waveform of the motion is a combination of sine wave and sawtooth wave, as shown in FIG. 9, a vibration amplitude is 1.2 mm, a vibration frequency is 100 Hz, a micro-injector has a flow rate of 100 nL/s, and an injection volume is 20 µL. Using the above parameter condition, a micro-droplet of 1 nL is prepared, a microscopic image of which is shown in FIG. 13, and a CV value related to droplet volume is 1.8%.

### Embodiment 2

As shown in FIG. 1, the control device includes a micro-droplet preparation unit. The micro-droplet preparation unit includes an asymmetric vibrating micro-droplet generation mechanism 1 and a firs dynamic positioning assembly 200, and the first dynamic positioning assembly 200 is fixedly connected to the asymmetric vibrating micro-droplet generation mechanism 1. The first dynamic positioning assembly 200 is configured to position the asymmetric vibrating micro-droplet generation mechanism 1.

The asymmetric vibrating micro-droplet generation mechanism 1 is configured to generate a micro-droplet through asymmetric reciprocating motion.

The control device further includes a fluid control unit (not shown in the figure). The fluid control unit includes a fluid driving device 500, a liquid supplying conduit 501, a liquid sucking conduit 502 and an electric two-position three-way switch valve. One valve port of the electric two-position three-way switch valve is connected to the fluid driving device 500, a second valve port is connected to one end of the liquid supplying conduit 501, and a third valve port is connected to one end of the liquid sucking conduit 502. The other end of the liquid sucking conduit 502 is connected to an oil storage bottle 504. The other end of the liquid supplying conduit 501 is connected to the micro-droplet generation mechanism 1.

The first dynamic positioning assembly 200 includes a positioning assembly lifting displacement mechanism 201, and the micro-droplet generation mechanism 1 is fixedly connected to the positioning assembly lifting displacement mechanism 201 of the first dynamic positioning assembly 200.

As shown in FIG. 21, the first dynamic positioning assembly 200 further includes a liquid level probing mechanism 202 to assist the first dynamic positioning assembly to precisely position an opening of a sample injector to 0.3 mm below a liquid level of the second liquid 702 in a second opening container 701. The liquid level probing mechanism is a high-definition CCD camera, which performs real-time imaging on the processing of inserting the sample injector into the liquid level, and determines a distance between the sample injector and the liquid level as well as a state of insertion by using image analysis. The above high-definition CCD camera assists the first dynamic positioning assembly to precisely position the opening of the sample injector to a fixed depth below the liquid level of the second liquid in the second opening container, and assists the first dynamic positioning assembly to make dynamic height position adjustment under the control of the control device when a height of the liquid level is changing due to the continuous generation of the droplets or when there is an error in the height of the liquid level that is brought about by an error in volume adding of the second liquid so as to ensure the long-time stability and uniformity of droplet generation.

The control device further includes a second dynamic positioning assembly 900, which is configured to fix and move a first opening container 801 and the second opening container 701.

The first opening container 801 is a single liquid storage tank and contains a first liquid 800.

The second opening container 701 is a two-dimensional flat-bottomed sample tank array for flatly laying the generated micro-droplets.

The control device further includes a preparing unit (not shown in the figure). The preparing unit includes a sample injector rack, an oil removing mechanism (a sponge), a sample injector unloading mechanism and a waste receptor. The oil removing mechanism (the sponge) is located above the waste receptor. The sample injector is unloaded above the waste receptor.

In this case, the micro-droplet generation mechanism is as shown in FIG. 7, and includes a vibration assembly 100, a connection guiding member 105, a vibrating mount 300, sample injectors 400 and a driving controller 600.

As shown in FIGS. 4 and 7, the micro-droplet generation mechanism in the present embodiment drives the vibrating mount 300 to make asymmetric swing with a central axis of a vibration output rod 104 as an axis. The micro-droplet generation mechanism includes a vibration assembly 100, a connection guiding member 105, a supporting and fixing receptacle 120, a vibrating mount 300, sample injectors 400, a supporting and fixing receptacle 120 and pump pipe holders 303. The vibration assembly 100 includes a case 101, a vibrator 102, a position sensor 103 and a vibration output rod 104. The vibration output rod 104 has one end connected to the case 101, and the other end thereof is connected to the vibrating mount 300 through the connection guiding member 105 and a connecting member 106. Central axes of the sample injectors 400 are perpendicular to the axis of the vibration output rod 104.

The connection guiding member 105 includes a first bearing 1053 and a second bearing 1054. The vibrating mount 300 has one end running through the first bearing 1053 and connected to a mounting member 103, and the other end of the vibrating mount 300 is connected to the second bearing 1054. The first bearing 1053 is a bearing having an axial stop edge. The connecting member 106 is a coupling.

The vibration assembly 101 is a Galvanometer motor. The vibrator 102 has a vibration frequency ranging from 100 to 500 Hz and a vibration amplitude ranging from 0.1 to 5 mm. In a practical application, the vibration frequency ranges from 100 to 200 Hz, and the amplitude ranges from 0.5 to 1.5 mm.

The vibrating mount 300 is provided with connectors 304, and each of the connectors 304 has one end connected to a liquid supplying conduit 501 via a pipe joint 302 and the other end connected to a sample injector 400 by means of a sample injector adapter 301. There are four connectors 304, which are provided in the vibrating mount 300 at equal intervals. The pump pipe holders 303 are configured to hold the liquid supplying conduits 501 to keep the liquid supplying conduits 501 vertical.

The driving controller 600 includes a vibration driving circuit 601, an asymmetric vibration control program 602, a position correction module 603, a position signal acquisition module 604 and a power supply control connecting cable 605. The driving controller 600 is electrically connected to the vibration assembly 100, and drives the vibrating mount 300 to make asymmetric reciprocating motion according to the asymmetric motion control program 602. The driving controller 600 acquires a real-time position feedback signal from the position sensor 103 through the position signal acquisition module 604, and feeds a real-time comparison between the real-time position feedback signal and the asymmetric motion control program back to the position correction module 603 to regulate a control parameter of the vibration driving circuit 601, thus realizing closed-loop control of the asymmetric reciprocating motion.

The driving controller 600 is further electrically connected to the first dynamic positioning assembly 200, the second dynamic positioning assembly 900 and the fluid driving device 500 to supply power thereto respectively.

A method for preparing micro-droplets using the above control device may include the following steps:
a) moving the sample injector adapter to the sponge, driving, by an injection pump, the liquid sucking conduit to suck a carrier liquid, switching the electric two-position three-way switch valve, discharging, by the injection pump, the carrier liquid from the sample injector adapter to fully fill the liquid sucking conduit, the liquid supplying conduit, the electric two-position three-way switch valve and the sample injector adapter with the carrier liquid without bubbles, and at the same time, removing, by the sponge, the excess carrier liquid discharged from an opening at a lower end of the sample injector adapter, wherein said carrier liquid is a second liquid that is not miscible with a sample liquid, and the carrier liquid is oil with hydrocarbon, fluorosilicon or fluorocarbon as a main component, such as a mineral oil, tetradecane, FC40, etc.;
b) inserting the sample injector adapter fully filled with the carrier liquid into the sample injector so that the sample injector and the sample injector adapter are connected in an inserted manner, wherein the sample injector has a liquid storage volume of 60 µL, the sample injector is prepared from polypropylene (PP, having a pure-water contact angle of 88°), and a liquid ejecting opening of the sample injector 400 has an inner diameter of 120 µm and an outer diameter of 400 µm;
c) moving the sample injector to the sponge, switching the electric two-position three-way switch valve, repeating step a) to fully fill the liquid sucking conduit, the liquid supplying conduit, the electric two-position three-way switch valve, the sample injector adapter and the sample injector with the carrier liquid without bubbles, and at the same time, removing, by the sponge, the excess carrier liquid discharged from the opening of the sample injector;
d) moving the sample injector in step c) to a position above a liquid level of a first opening container containing a first liquid, and moving the same downwards to make a liquid outlet of the sample injector contact with and immersed in a water solution (the first liquid), switching the electric two-position three-way switch valve, and repeating the step a) to suck 20 µL of the first liquid into the sample injector;
e) moving the sample injector in step d) away from the first opening container, and moving the same to a position above a second opening container containing mineral oil (a second liquid), and moving the same downwards to make the liquid outlet of the sample injector contact with and immersed in the second liquid, wherein a depth that the sample injector is immersed below a liquid level of the second liquid is 0.3 mm; and
f) discharging, under driving of the injection pump, the first liquid inside the sample injector out of the liquid outlet of the sample injector, using the driving controller 600 as a driving signal generator for the sample injector to make asymmetric periodic reciprocating motion below or across the liquid level of the second liquid, and driving, by the vibration motor in the micro-droplet generation mechanism, the sample injector adapter to drive the liquid ejecting opening of the sample injector to make asymmetric reciprocating motion, wherein a position-time waveform of the motion is a combination of square wave and sawtooth wave, as shown in FIG. 11, a vibration frequency is 100 Hz, a vibration amplitude is 1.2 mm, the injection pump has a flow rate of 100 nL/s, and an injection volume of 20 µL. A micro-droplet of 1 nL is prepared thereby, a microscopic image of which is shown in FIG. 14, a volume of the droplet is 1 nL, and a CV value related to volume is 2.1%.

### Comparative Example 1

Comparative Example 1 differs from Embodiment 1 in that its micro-droplet generation mechanism makes symmetric reciprocating vibration in the direction of the central axis of the vibration output rod, the vibration has a waveform of sine wave (as shown in FIG. 12a), a vibration amplitude of 1.2 mm and a vibration frequency of 100 Hz, and a micro-injector has a flow rate of 100 nL/s and an injection volume of 20 µL. The others including a structure of the micro-droplet generation mechanism and conditions of a micro-droplet preparation method are the same as that in Embodiment 1. Prepared micro-droplets, as shown in FIG. 15, have nonuniform volume sizes, and a CV value related to volume is 35%. It is found from further observation of microscopic high-speed imaging that, as there are droplet cuttings in both half periods of vibration and there is also defect such as a burr in the machining of the sample injector, in some cases, a droplet at an injector liquid ejecting opening within one period cannot be cut off by an oil-phase shear force, resulting in ineluctable generation a droplet of 1nL, 1.5nL, or 2nL.

### Comparative Example 2

Comparative Example 2 differs from Embodiment 1 in that its micro-droplet generation mechanism makes symmetric reciprocating vibration in the direction of a central axis of a vibration output rod, the vibration has a waveform of square wave (as shown in FIG. 12b), a vibration amplitude of 1.2 mm and a vibration frequency of 200 Hz, and a micro-injector has a flow rate of 200 nL/s and an injection volume is 20 µL. The others including a structure of the micro-droplet generation mechanism and conditions of a micro-droplet preparation method are the same as that in Embodiment 1. Prepared micro-droplets, as shown in FIG. 16, have a CV value related to droplet volume of 15%. It is found from further observation of microscopic high-speed imaging that, within one vibration period, a sample injector liquid ejecting opening generates one droplet in both the first half period and the second half period, but a volume size of the droplet generated in the early half period is different from that of the droplet generated in the later half period due to defects such as different axes machined in the sample injector, thus introducing a large volume error.

### Comparative Example 3

Comparative Example 3 differs from Embodiment 1 in that its micro-droplet generation mechanism does not include a connection guiding member 105. That is, the output rod 104 is directly connected to the vibrating mount 300 through the connecting member 106. Other structures are the same as that in Embodiment 1. Micro-droplets are prepared using the same micro-droplet preparation method as Embodiment 1. The vibration mechanism thereof has high vibration noise and obvious resonance. The prepared micro-droplets have a CV value related to droplet volume of 7.5%, and have poor uniformity compared to Embodiment 1, thus introducing a large volume error. When a sample injector is mounted, the vibration assembly cannot resist a torque force and a radial force due to the lack of the connection guiding member. As a result, after 34 times of use, a junction between the galvanometer vibration output rod and the vibration motor is bent, so that the sample injector cannot be normally inserted.

### Comparative Example 4

Comparative Example 4 differs from Embodiment 2 in that its micro-droplet generation mechanism makes symmetric swing with the central axis of the vibration output rod 104 as an axis. The others including a structure of the micro-droplet generation mechanism and conditions of a micro-droplet preparation method are the same as that in Embodiment 2. Specific parameters of symmetric reciprocating motion are as follows. The vibration has a waveform of square wave (as shown in FIG. 12b), a vibration amplitude of 1.2 mm and a vibration frequency of 100Hz, and a micro-injector has a flow rate of 100 nL/s and an injection volume is 20 µL. Prepared micro-droplets thereby have poor uniformity and have a CV value related to droplet volume of 8.5%, thus introducing a large volume error.

### Comparative Example 5

Comparative Example 5 differs from Embodiment 2 in that its micro-droplet generation mechanism does not include a connection guiding member 105. That is, the output rod 104 is directly connected to the vibrating mount 300 through the connecting member 106. Other structures are the same as in Embodiment 2. Micro-droplets are prepared using the same micro-droplet preparation method as Embodiment 2. The prepared micro-droplets are shown in FIG. 12a. Specific parameters of symmetric reciprocating motion are as follows. The vibration has a waveform of sine wave, a vibration amplitude of 1.2 mm and a vibration frequency of 100Hz, and a micro-injector has a flow rate of 100 nL/s and an injection volume is 20 µL. The prepared micro-droplets thereby have poor uniformity and have a CV value related to droplet volume of 7.4%, thus introducing a large volume error. The vibration mechanism has high vibration noise and obvious resonance. When a sample injector is mounted, the vibration assembly cannot resist a torque force and a radial force due to the lack of the connection guiding member. As a result, after 25 times of use, the galvanometer vibration output rod is bent so that the sample injector cannot be normally inserted.

### Comparative Example 6

Comparative Example 6 differs from Embodiment 2 in that its micro-droplet generation mechanism does not include a sample injector adapter 301. That is, the liquid supplying conduit 501 runs through the vibrating mount 300 and is directly connected to a sample injector 401. Other structures are the same as in Embodiment 2. Micro-droplets are prepared using the same micro-droplet preparation method as Embodiment 2. The prepared micro-droplets thereby are shown in FIG. 12a. Specific parameters of symmetric reciprocating motion are as follows. The vibration has a waveform of sine wave, a vibration amplitude of 1.2 mm and a vibration frequency of 100Hz, and the micro-injector has a flow rate of 100 nL/s and an injection volume is 20 µL. The prepared micro-droplets thereby have poor uniformity and have a CV value related to droplet volume of 30%, thus introducing a large volume error. When the sample injector is mounted, the airtightness is poor due to the lack of sample injector adapter, and it is prone to an imprecise volume of droplet generation due to leakage.

The vibration assembly parameters and droplet generation results of the above embodiments and comparative examples are shown in Table 1.

**Table 1 Vibration assembly parameters and droplet generation results of Embodiments and Examples**

| Embodiment! Example | Motion mode | Waveform | Connection guiding member | Sample injector adapter | Vibration amplitude (mm) | Frequ ency (Hz) | Flow rate (nL/s) | Droplet volume (nL) | Volume CV (%) |
|---|---|---|---|---|---|---|---|---|---|
| Embodiment 1 | Vibration | Sine wave and sawtooth wave (FIG. 10) | Yes | Yes | 1.2 | 100 | 100 | 1.01 | 1.8 |
| Embodiment 2 | Swing | Square wave and sawtooth wave (FIG. 11) | Yes | Yes | 1.2 | 100 | 100 | 0.99 | 2.1 |
| Comparative Example 1 | Vibration | Sine wave (FIG. 12a) | Yes | Yes | 1.2 | 100 | 100 | 1.86 | 35 |
| Comparative Example 2 | Vibration | Square wave (FIG. 12b) | Yes | Yes | 1.2 | 200 | 200 | 1.08 | 15 |
| Comparative Example 3 | Vibration | Sine wave and sawtooth wave (FIG. 10) | No | Yes | 1.2 | 100 | 100 | 1.03 | 7.5 |
| Comparative Example 4 | Swing | Square wave (FIG. 12b) | Yes | Yes | 1.2 | 100 | 100 | 0.98 | 8.5 |
| Comparative Example 5 | Swing | Sine wave (FIG. 12a) | No | Yes | 1.2 | 100 | 100 | 0.99 | 7.4 |
| Comparative Example 6 | Swing | Sine wave (FIG. 12a) | Yes | No | 1.2 | 100 | 100 | 2.5 | 30 |

The above embodiments/examples show that the use of the asymmetric reciprocating motion proposed by the present disclosure can effectively avoid nonuniformity in droplet sizes brought about by the asymmetry caused by the machining defects of a sample injector and an error of injection molding at the opening.

### Embodiments 3-6

Embodiments 3-6 differ from Embodiment 1 in that the first dynamic positioning assembly positions a sample injector to a depth of 0.5 mm, 1.0 mm, 1.5 mm and 2.5 nm below the liquid level. After being generated using the asymmetric vibrating micro-droplet generation mechanism and flatly laid at the bottom of the container, the droplets are observed by microscope imaging, and the results are as follows.

Embodiment 3: the sample injector is positioned 0.5 mm below the liquid level, and the generated droplets are shown in FIG. 22. The generated droplets are uniform and have a volume of 1 nL.

Embodiment 4: the sample injector is positioned 1.0mm below the liquid level, and the generated droplets are shown in FIG. 23. The generated droplets are uniform and have a volume of 1 nL.

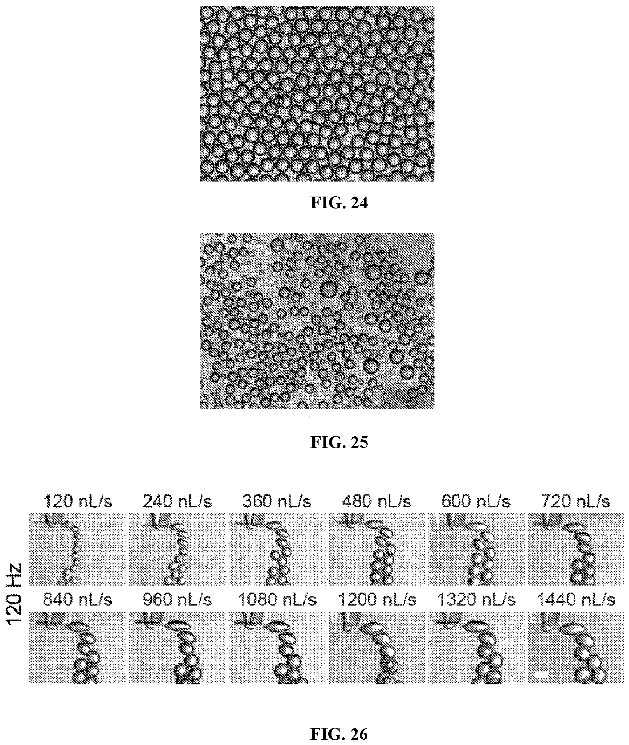

Embodiment 5: the sample injector is positioned 1.5mm below the liquid level, and the generated droplets are shown in FIG. 24. The generated droplets are uniform and have a volume of 1 nL.

Embodiment 6: the sample injector is positioned 2.5mm below the liquid level, and the generated droplets are shown in FIG. 25. The generated droplets are uniform, but the droplets are partially broken up due to disturbance of the oil phase.

The experiment shows that, when the sample injector is located 0.0 to 1.5 mm below the liquid level, the generated droplets are uniform and have an accurate volume, and the droplets can settle orderly in the generation process without being disturbed by the injection injector.

The experimental results of Embodiments 3-6 show that, in use of the control device for micro-droplet preparation provided by the present disclosure, it is required to use the asymmetric vibrating micro-droplet generation mechanism in conjunction with the first dynamic positioning assembly to effectively control the depth of insertion of the sample injector into the liquid level, so as to ensure the uniformity of the droplet size and the stability and reliability of the droplet generation system. In the practical use of the droplet generation device, an array of sample injectors tends to be used to generate droplets inside an array of containers. It is impossible for the plurality of sample injectors to be free of a machining error, a assembly error, and a liquid level error brought about by a volume error of the oil phase in the container. Furthermore, as the number of droplets generated increases, the liquid level of the second liquid will gradually rise, and the depth of insertion of the sample injectors into the liquid level gradually deviates from an allowable range of depth. The first dynamic positioning assembly with a dynamic height regulating function can ensure that the above errors and changes in the liquid level during droplet generation will not affect the stability and reliability of the system.

### Embodiments 7-18

Embodiments 7-18 differs from Embodiment 1 in that their vibration frequencies are fixed at 120 Hz, and flow rates of the first liquid sample are varied at 120 nL/s, 240 nL/s, 360 nL/s, 480 nL/s, 600 nL/s, 720 nL/s, 840 nL/s, 960 nL/s, 1080 nL/s, 1200 nL/s, 1320 nL/s and 1440nL/s, respectively. Under the above conditions, after being generated using the asymmetric vibrating micro-droplet generation mechanism and flatly laid at the bottom of the container, the droplets are observed by microscope imaging, and the results are shown in FIG. 26. The results show that the generated droplets have a volume of 1 nL, 2 nL, 3 nL, 4 nL, 5 nL, 6 nL, 7 nL, 8 nL, 9 nL, 10 nL, 11 nL and 12nL, respectively. The droplets of each embodiment have a uniform size, and the droplet volume is equal to a value of the flow rate being divided by the vibration frequency.

Embodiments 7-18 validate that the control device for micro-droplet preparation provided by the present disclosure has the advantage in terms of controllable droplet generation.

### Embodiments 19-28

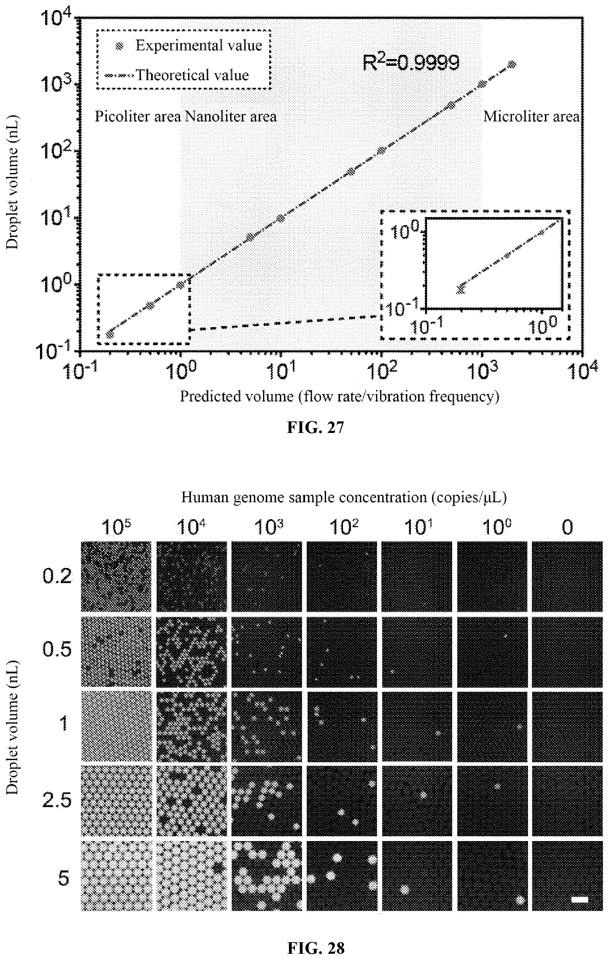

Embodiments 19-28 differ from embodiment 1 in the flow rates of the first liquid sample and the vibration frequencies of the sample injector, which are shown in Table 2. A theoretical volume of a droplet generated through asymmetric vibration using the control device for micro-droplet generation is set as the flow rate being divided by the vibration frequency. The volumes of various droplets generated in Embodiments 19-28 are consistent with both actual and theoretical volumes of the generated droplets, and a linear correlation between the actual and theoretical volume values of the generated droplets is linearly consistent with theoretical calculations (R² = 0.9999, FIG. 27), with the volumes of 200 pL, 500 pL, 1 nL, 5 nL, 10 nL, 50 nL, 100 nL, 500 nL, 1 µL and 2 µL, respectively.

Embodiments 19-28 further demonstrate that the use of the present disclosure allows of rapid generation of size-adjustable droplets by regulating the flow rate, the vibration amplitude and the frequency. The generation conditions are flexible and controllable, allowing of controllable generation of volume-adjustable micro-droplets across five orders of magnitude (200 pL to 2 µL), which is far beyond a regulable interval of droplet generation that uses an existing microfluidic chip method and does not require a modification in the structure of the sample injector. Compared with the existing droplet generation technology using the microfluidic chip method, the device provided by the present disclosure can directly set a size of the droplets, rather than determining the size of the droplets by empirically applying volume observation and parameter optimization to the droplets. The volumes of the droplets are not affected by change of the inner diameters of the sample injectors, and thus have pretty good consistency.

**Table 2 Generation of droplets by means of asymmetric vibrating micro-droplet generation mechanism by regulating flow rate, vibration amplitude and frequency**

| Embodiment | Vibration amplitude | First liquid flow rate | Vibration frequency | Theoretical volume of droplet | Actual volume of droplet |
|---|---|---|---|---|---|
| 19 | 0.77 mm | 24 nL/s | 120 Hz | 200 pL | 200 pL |
| 20 | 0.75 mm | 60 nL/s | 120 Hz | 500 pL | 500 pL |
| 21 | 0.55 mm | 120 nL/s | 120 Hz | 1 nL | 1 nL |
| 22 | 0.54 mm | 500 nL/s | 100 Hz | 5 nL | 5 nL |
| 23 | 0.47 mm | 1000 nL/s | 100 Hz | 10 nL | 10 nL |
| 24 | 0.75 mm | 1000 nL/s | 20 Hz | 50 nL | 50 nL |
| 25 | 1.14 mm | 500 nL/s | 5 Hz | 100 nL | 100 nL |
| 26 | 1.14 mm | 500 nL/s | 1 Hz | 500 nL | 500 nL |
| 27 | 1.14 mm | 500 nL/s | 0.5 Hz | 1 µL | 1 µL |
| 28 | 1.14 mm | 1000 nL/s | 0.5 Hz | 2 µL | 2 µL |

### Embodiment 29

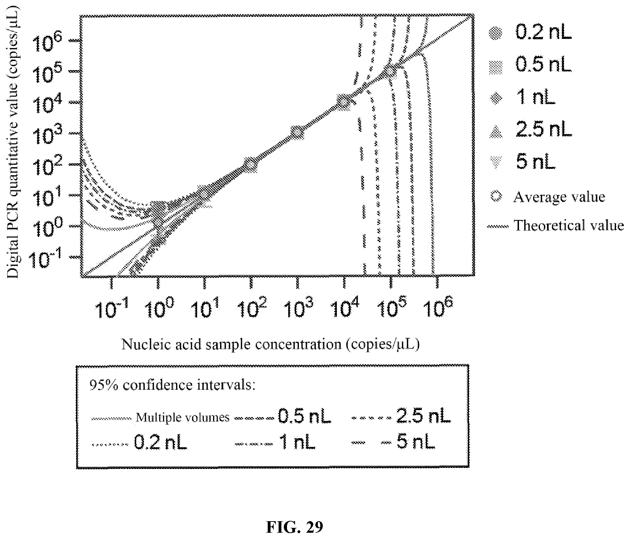

The present embodiment verifies the performance of a multivolume digital PCR assay using the control device for micro-droplet preparation provided by the present disclosure. Conventional digital PCR instruments, such as Bio-Rad QX200, Thermo Fisher Quantstudio 3D, Stilla Naica and other systems, produce a fixed volume of droplets or microreactions, with the volume of the droplets ranging from 0.5 to 0.8 nL. A dynamic linear detection range is typically an order of magnitude of 10⁵. The dynamic range is narrow, and there is a trade-off between sensitivity and quantization limits. The embodiment utilizes the control device for micro-droplet preparation to generate a plurality of droplet arrays of a predetermined volume on demand, which further improves the precision and dynamic detection range of digital PCR. Upper limits of quantification with respect to different volumes of micro-droplets are estimated based on a classical digital PCR Poisson distribution model. It was found by calculation that a detected upper limit of droplet quantification increases as a droplet volume decreases. This is mainly because, under the same reaction system, the smaller the micro-droplets are, the greater the number of divisible units is, so that the detected upper limit increases to some extent as a ratio of the number of positive droplets to the total number of the droplets varies at the same concentration. Then, based on the theoretical model, dynamic ranges of quantification with respect to different volumes of micro-droplets were theoretically calculated to predict the dynamic ranges of digital PCR linear detection under different droplet volume conditions. 95% confidence intervals of quantification for droplets of 0.2 nL, 0.5 nL, 1 nL, 2.5 nL and 5 nL volumes are shown as dotted lines in different formats in FIG. 29. A 95% confidence interval of quantification for droplets combining five volumes is shown as a solid curve in FIG. 29. It can be seen that it is theoretically possible by using different volume methods to extend the dynamic range of quantification from an order of magnitude of 10⁵ to an order of magnitude of 10⁶ (as shown in Table 3).

**Table 3 Upper limit of quantification, lower limit of detection and detection error of digital PCR with respect to multiple volumes**

| Droplet volume (nL) | Upper limit of quantification ^{[1]} (copies/µL) | Upper limit error (%) | Lower limit of detection ^{[2]} (copies/µL) | Lower limit error (%) |
|---|---|---|---|---|
| 0.2 | 8.4×10⁵ | 4.74 | 4×10¹ | 11.74 |
| 0.5 | 1.8×10³ | 7.91 | 1.5×10¹ | 12.68 |
| 1 | 5.6×10⁴ | 1.80 | 8×10⁰ | 13.84 |
| 2.5 | 1.2×10⁴ | 10.70 | 3.2×10⁰ | 9.62 |
| 5 | 3.8×10³ | 10.07 | 1.6×10⁰ | 12.36 |
| Combination of the above multiple volumes | 8.4×10⁵ | 3.65 | 1.6×10⁰ | 7.17 |

| | | | | |
|---|---|---|---|---|
| Notes: ^{[1]} The upper limit of quantification for each condition refers to a concentration observed when the fraction of positive droplets is 0.95; and ^{[2]} the lower limit of detection for each condition refers to there being five positive droplets in one reaction. | | | | |

An actual experiment has the following steps.

A configured digital PCR reaction system has a volume of 25 µL and is composed of 12.5 µL 2 × dPCR Super Mix (Beijing Dawei Microbial Technology Co., Ltd.), 6.9 µL of deionized water, 0.6 µL of DNA polymerase (Beijing Dawei Microbial Technology Co., Ltd.), 2.5 µL of a 10 × PCR primer probe, and 2.5 µL of a nucleic acid template. A target of detection is EIF5B (eukaryotic translation initiation factor 5B) gene in human genomic DNA (gDNA) (as shown in Table 4).

**Table 4 EIF5B Gene primer and probe vs. gene sequence by Digital PCR detection**

| Name of primer/probe | Oligonucleotide sequence |
|---|---|
| EIF5B-F | 5'-ATGAGATGCCAAACTTCAGC-3' (SEQ ID N0:1) |
| EIF5B-R | 5'-GGCAACATTTCACACTACAG-3' (SEQ ID NO:2) |
| EIF5B-P | VIC-CTCTTCTCATGCAGTTGTCAGAAG-MGB (SEQ ID N0:3) |

A gDNA sample (TaqMan Control Genomic DNA, Applied Biosystems, USA) was continuously diluted in a TE buffer to concentrations of 100,000, 10,000, 1,000, 100, 10, and 1 copy/µL. Pure water was used as a blank control. Same as the other experimental conditions of Embodiment 1, the control device for micro-droplet preparation was utilized at a frequency of 120 Hz to successfully produce droplets of 0.2 nL, 0.5 nL, 1 nL, 2.5 nL and 5 nL using flow rates of 24 nL/s, 60 nL/s, 120 nL/s, 300 nL/s, and 600 nL/s, respectively, and their results were shown in FIG. 28, with the generated droplets forming planar monolayer droplet arrays in flat-bottomed well plates (Beijing Dawei Microbial Technology Co., Ltd.). A flat-bottomed well plate was amplified on a plate PCR amplifier (Beijing Dawei Microbial Technology Co., Ltd.) using the following PCR process: i.e., going through a cycle of 95°C for 5 min, 94°C for 20 s and 58°C for 1 min for 45 times, and finally being kept at 25°C. After amplification, the flat-bottomed well plate was transferred to a fluorescent reader for acquiring a fluorescent image of the droplets, and digital PCR analysis software was applied for result analyzing so as to obtain absolute quantitative results of the EIF5B gene with respect to different concentrations and different droplet volumes.

The results are shown in FIG. 29. It can be seen from FIG. 29 that the dynamic range of quantification detection was investigated within a range of human genomic gDNA template concentration of 1-10⁵ copies/µL by generating different volumes of micro-droplets, such as 0.2 nL, 0.5 nL, 1 nL, 2.5 nL, and 5 nL,. A linear regression was made with respect to a quantification result of each volume of droplets, and R-value results of the quantification regarding the micro-droplets of 0.2 nL, 0.5 nL, 1 nL, 2.5 nL and 5 nL are 0.979, 0.980, 0.995, 0.993, and 0.987, respectively; and a R-value of the quantification combining the droplets of all volumes is 0.996.

The above results show that the dynamic range of quantification detection of digital PCR may be greatly expanded by performing comprehensive statistics on the quantification results with respect to different volumes of droplets, thus improving the accuracy of quantification. Currently, fluorescent quantitative PCR as the mainstream has a linear range of 5-7 log 10 concentrations, and chip-based imported digital PCR typically has a linear range of 4-5 log10 concentrations, which is narrower than that of fluorescent quantitative PCR. The control device for droplet generation provided by the present disclosure not only greatly reduces the cost of consumables for digital PCR and realizes automatic preparation of droplet arrays, but also can further expand the linear dynamic range of digital PCR through a multivolume technology, so as to popularize quantification detection of digital PCR in applications such as viral loads, high sensitive detection of rare mutations, which is of great significance.

The exemplary embodiments of the control device for micro-droplet generation provided by the present disclosure are described and/or illustrated in detail above. However, the embodiments of the present disclosure are not limited to the particular embodiments described herein; rather, the components and/or steps of each embodiment may be used independently and separately from the other components and/or steps described herein. Each component and/or each step of one implementation may also be used in combination with other components and/or steps of other embodiments. When introducing the elements/components/etc. described and/or illustrated herein, the terms "a", "one" and "above" are used to indicate the presence of one or more elements/components/etc. The terms "comprise", "include" and "has" are used to indicate open-ended inclusion and to mean that additional elements/components/etc. may exist in addition to those listed. In addition, the terms "first" and "second" in the claims and the description are used only as indications and not as numerical limitations on the objects thereof.

## Claims

1. A control device for micro-droplet preparation, **characterized in that**, the control device comprises a micro-droplet preparation unit, wherein the micro-droplet preparation unit comprises an asymmetric vibrating micro-droplet generation mechanism and a first dynamic positioning assembly, and the first dynamic positioning assembly is fixedly connected to the asymmetric vibrating micro-droplet generation mechanism;
the first dynamic positioning assembly is configured to position the asymmetric vibrating micro-droplet generation mechanism; and
the asymmetric vibrating micro-droplet generation mechanism is configured to generate micro-droplet through asymmetric reciprocating motion.

2. The control device according to claim 1, **characterized in that**, the asymmetric vibrating micro-droplet generation mechanism generates one micro-droplet within one motion period.

3. The control device according to claim 1, **characterized in that**, the asymmetric vibrating micro-droplet generation mechanism comprises a vibration assembly, a vibrating mount, a sample injector and a driving controller, wherein
the driving controller is electrically connected to the vibration assembly, and drives the vibrating mount to make asymmetric reciprocating vibration or asymmetric reciprocating swing, so that the sample injector generates a micro-droplet.

4. The control device according to claim 3, **characterized in that**, the sample injector generates one micro-droplet within one period of the asymmetric reciprocating vibration or the asymmetric reciprocating swing of the vibrating mount.

5. The control device according to claim 3, **characterized in that**, the vibration assembly comprises a case, a vibrator and a vibration output rod;
the vibration output rod of the vibration assembly supplies power to the vibrating mount;
the vibrating mount is provided with a connector, a pipe joint and a sample injector adapter;
the connector has one end connected to a liquid supplying conduit via the pipe joint and another end connected to the sample injector by means of the sample injector adapter; and
a central axis of the sample injector is perpendicular to an axis of the vibration output rod.

6. The control device according to claim 5, **characterized in that**, the asymmetric reciprocating motion is asymmetric reciprocating vibration of the vibrating mount in a direction of a central axis of the vibration output rod.

7. The control device according to claim 5, **characterized in that**, the asymmetric reciprocating motion is asymmetric swing of the vibrating mount with a central axis of the vibration output rod as an axis.

8. The control device according to claim 3 or 5, **characterized in that**, the vibration assembly has a vibration frequency ranging from 10 to 1000 Hz, preferably, 50 to 200 Hz;
preferably, the vibration assembly has a vibration amplitude ranging from 0.1 to 5 mm, preferably, 0.5 to 2 mm.

9. The control device according to 5, **characterized in that**, the vibrating mount has a swing frequency ranging from 10 to 1000 Hz, preferably, 50 to 200 Hz;
preferably, a distance between a liquid ejecting opening of the sample injector and the axis of the vibration output rod ranges from 10 to 100 mm, preferably, 30 to 80 mm; and the vibrating mount has a swing angle ranging from 0.05° to 10°, preferably, 0.2° to 2°.

10. The control device according to claim 5, **characterized in that**, the vibrating mount and the vibration output rod are connected through a coupling.

11. The control device according to claim 3 or 5, **characterized in that**, the vibration assembly further comprises a position sensor, and the driving controller implements closed-loop control of motion by acquiring a real-time position feedback signal of the position sensor; and
preferably, the position sensor is any one of a grating scale sensor, a capacitive position sensor, a resistive sensor, a current sensor, or a differential transformer sensor.

12. The control device according to claim 5, **characterized in that**, wherein the asymmetric vibrating micro-droplet generation mechanism further comprises a supporting and fixing receptacle for fixing the vibration assembly; and
preferably, the asymmetric vibrating micro-droplet generation mechanism further comprises a pump pipe holder for holding the liquid supplying conduit.

13. The control device according to claim 3 or 5, **characterized in that**, there are a plurality of connectors, which are provided inside the vibrating mount at equal intervals;
preferably, a number of the connectors ranges from 1 to 96, preferably, 2, 4, 8, or 12.

14. The control device according to claim 5, **characterized in that**, the asymmetric vibrating micro-droplet generation mechanism further comprises a connection guiding member, wherein
the vibration output rod of the vibration assembly is connected to the vibrating mount through the connection guiding member to supply power to the vibrating mount.

15. The control device according to claim 14, **characterized in that**, the connection guiding member is a ball spline including a spline shaft and a spline sleeve, and ends of the spline shaft are fixedly connected to the vibration output rod and the vibrating mount, respectively.

16. The control device according to claim 14, **characterized in that**, the connection guiding member includes a first bearing and a second bearing, and the vibrating mount has one end running through the first bearing and connected to the vibration output rod and another end connected to the second bearing, wherein the first bearing is a bearing with an axial stop edge.

17. The control device according to claim 3 or 5, further comprising a sample injector unloading mechanism, configured to automatically unload the sample injector after generation of the micro-droplet.

18. The control device according to claim 5, **characterized in that**, the sample injector is of a conical pipe-shaped structure with openings at both ends, an opening at one end is a liquid supply opening for tight insertion with the sample injector adapter, and an opening at other end is a liquid ejecting opening for micro-droplet generation, the liquid ejecting opening has an inner diameter ranging from 20 to 300 µm and an outer diameter ranging from 150 to 600 µm;
preferably, the sample injector has a liquid storage volume ranging from 5 to 500 µL, preferably, 20 to 60 µL.

19. The control device according to claim 3 or 5, **characterized in that**, upon the vibrating mount making the asymmetric reciprocating motion, motion of a liquid ejecting part of the sample injector is configured to have one equilibrium point and two reflecting-points at both ends of the equilibrium point, and a motion position versus time curve is asymmetric on both sides of any one of the reflecting-points; and
preferably, periodic motion of the liquid ejecting part of the sample injector has an asymmetric waveform of an asymmetric combination of at least one of sine wave, sawtooth wave, trapezoidal wave, triangular wave, and square wave.

20. The control device according to claim 3 or 5, **characterized in that**, the vibration assembly is configured as a mechanism producing continuous or intermittent motion, the vibration assembly is one selected from electromagnetic vibration device, piezoelectric ceramic vibration device, eccentric wheel type vibration device, a servo motor, a voice coil motor, and a galvanometer motor.

21. The control device according to claim 1, **characterized in that**, the first dynamic positioning assembly comprises:
a positioning assembly lifting displacement mechanism, configured to control lifting of the asymmetric vibrating micro-droplet generation mechanism;
preferably, the first dynamic positioning assembly further includes a liquid level probing mechanism.

22. The control device according to claim 1, **characterized in that**, the control device further comprises a fluid control unit,
the fluid control unit includes a fluid driving device and a conduit, and the conduit has one end connected to the fluid driving device and another end connected to the asymmetric vibrating micro-droplet generation mechanism;
preferably, the fluid driving device is configured to set a flow rate for liquid sucking and discharging of a sample injector.

23. The control device according to claim 22, **characterized in that**, the control device further comprises a second dynamic positioning assembly, the second dynamic positioning assembly is configured to fix and move a first opening container and a second opening container;
preferably, the driving controller supplies power to the fluid driving device, the first dynamic positioning assembly and the second dynamic positioning assembly.

24. The control device according to claim 23, **characterized in that**, the first opening container is a single liquid storage tank, a one-dimensional liquid storage tank array, or a two-dimensional liquid storage tank array, and each liquid storage tank has a capacity ranging from 10 to 1000 µL, preferably, 20 to 200 µL;
preferably, the first opening container contains a first liquid;
preferably, the second opening container is a two-dimensional flat-bottomed sample tank array for flatly laying generated micro-droplets; preferably, the second opening container includes 24, 32, 96 or 384 flat-bottomed sample tanks with an equal capacity;
preferably, the second opening container contains a second liquid.

25. The control device according to claim 22, **characterized in that**, the fluid driving device is a pulsation-free driving pump, preferably, an injection pump, and further preferably, a number of the fluid driving device is one or more.

26. The control device according to claim 22, **characterized in that**, the conduit comprises a liquid supplying conduit and a liquid sucking conduit, the liquid sucking conduit has one end connected to the fluid driving device through one valve port of an electric two-position three-way switch valve, and another end of the liquid sucking conduit is inserted into an oil storage device; and the liquid supplying conduit has one end connected to the fluid driving device through one valve port of the electric two-position three-way switch valve, and another end of the liquid supplying conduit is connected to the asymmetric vibrating micro-droplet generation mechanism.

27. The control device according to claim 1, **characterized in that**, the control device further comprises a preparing unit, the preparing unit comprises a sample injector rack, an oil removing mechanism and a waste receptor, the oil removing mechanism is located above the waste receptor, and the sample injector is unloaded above the waste receptor.

28. A method for preparing micro-droplets using the control device according to any one of claims 1-27, comprising:
driving the conduit, the sample injector adapter and a sample injector by using the fluid driving device to fully fill the sample injector with a first liquid; and
contacting the sample injector fully filled with the first liquid with a second liquid, and driving, by the asymmetric vibrating micro-droplet generation mechanism under driving of the fluid driving device, the sample injector adapter to drive the sample injector to make asymmetric reciprocating motion below a liquid level of the second liquid, thus generating a micro-droplet.

29. The method according to claim 28, **characterized in that**, before driving the conduit, the sample injector adapter and the sample injector by using the fluid driving device to fully fill the sample injector with a first liquid, the method further comprises steps of:
a) moving the sample injector adapter to the oil removing mechanism, driving, by the fluid driving device, the liquid sucking conduit to suck a carrier liquid, switching an electric two-position three-way switch valve, discharging, by the fluid driving device, the carrier liquid from the sample injector adapter to fully fill the liquid sucking conduit, the liquid supplying conduit, the electric two-position three-way switch valve and the sample injector adapter with the carrier liquid without bubbles, and at the same time, removing, by the oil removing mechanism, excess carrier liquid discharged from an opening at a lower end of the sample injector adapter;
b) inserting the sample injector adapter fully filled with the carrier liquid into the sample injector, so that the sample injector and the sample injector adapter are connected in an inserted manner; and
c) moving the sample injector to the oil removing mechanism, switching the electric two-position three-way switch valve, repeating the step a) to fully fill the liquid sucking conduit, the liquid supplying conduit, the electric two-position three-way switch valve, the sample injector adapter and a sample injector with the carrier liquid without bubbles, and at the same time, removing, by the oil removing mechanism, excess carrier liquid discharged from an opening of the sample injector.

30. The method according to claim 29, **characterized in that**, driving the conduit, the sample injector adapter and a sample injector by using the fluid driving device to fully fill the sample injector with a first liquid comprises:
moving the sample injector in step c) to a position above a liquid level of the first opening container containing the first liquid, and moving it downwards to make a liquid outlet of the sample injector contact with and immersed in the first liquid, and switching the electric two-position three-way switch valve to suck the first liquid into the sample injector, so that the sample injector is fully filled with the first liquid.

31. The method according to claim 30, **characterized in that**, a volume of the first liquid sucked by the sample injector liquid outlet is less than a capacity of a cavity connecting to the sample injector.

32. The method according to claim 28, further comprising:
unloading, after completing micro-droplet preparation using the first liquid, the sample injector, and then reinserting a sample injector for micro-droplet preparation of another first liquid.

33. The method according to claim 28, **characterized in that**, the sample injector makes asymmetric reciprocating vibration or asymmetric swing below the liquid level of the second liquid, and the fluid driving device is configured to set a flow rate for discharging the first liquid from the sample injector, thus generating a micro-droplet.

34. The method according to claim 28, **characterized in that**, only one micro-droplet is generated within one period of the asymmetric reciprocating motion by the sample injector below the liquid level of the second liquid.

35. The method according to claim 28, **characterized in that**, the first dynamic positioning assembly drives the asymmetric vibrating micro-droplet generation mechanism to precisely position the sample injector below the liquid level of the second liquid, and during asymmetric vibration of the sample injector, an average depth of the sample injector inserted into the liquid level is dynamically maintained within a range from 0 to 2.0 mm below the liquid level, preferably, within a range from 0 to 1.5 mm below the liquid level.
